# EUROPEAN PATENT APPLICATION

(11) **EP 4 255 049 A1**
(43) Date of publication of application: **04.10.2023**
(21) Application number: 20967246.8
(22) Date of filing: 28.12.2020
(51) Int. Cl.: H04W 56/00, H04W 52/02

(54) **RELAY COMMUNICATION METHOD AND APPARATUS**

(71) Applicant: Huawei Technologies Co., Ltd., Shenzhen, Guangdong 518129 (CN)
(72) Inventor: LIU, Fengwei, Shenzhen, Guangdong 518129 (CN)
(74) Representative: Gill Jennings & Every LLP
(86) International application number: PCT/CN2020/140011
(87) International publication number: WO 2022/140894

(57) **Abstract**

This application discloses a relay communication method and apparatus, to resolve a problem of low accuracy of determining an uplink-downlink configuration through envelope detection in a conventional technology. The method includes: A relay device receives first information sent by a host device, and performs relay forwarding based on the first information. The first information is used to determine whether the relay device turns on an amplify-and-forward function on a first time domain resource unit in a first time domain resource set, the first time domain resource set includes one or more time domain resource units, and the first time domain resource unit is any time domain resource unit in the first time domain resource set. The host device indicates, by using the first information, a time domain resource unit on which the relay device turns on/turns off the amplify-and-forward function, so that the relay device can accurately determine an uplink-downlink transmission boundary, to reduce impact of interference noise, and further improve communication quality.

## Description

### TECHNICAL FIELD

This application relates to the field of communication technologies, and in particular, to a relay communication method and apparatus.

### BACKGROUND

In wireless and mobile communication, a base station and a terminal device increase a transmission bandwidth to meet a requirement of a user for an increasing transmission rate. To obtain a larger transmission bandwidth, a mobile communication system uses a spectrum resource of a higher carrier frequency. Although a high frequency band can provide more spectrum resources, an electromagnetic wave of the high frequency band also has disadvantages such as large propagation attenuation and a weak diffraction capability. Therefore, it is more difficult for a cellular communication system deployed in the high frequency band to implement full coverage of an area. That is, a coverage hole may occur. Typical coverage holes include areas blocked by buildings, indoor areas, and the like. A relay node may be used to resolve a coverage problem in a wireless communication system. A typical relay system includes amplify-and-forward (amplify-and-forward, AF) relay and the like.

In the AF relay, after receiving a downlink signal sent by a base station, a relay node directly forwards the downlink signal, or after receiving an uplink signal sent by user equipment (user equipment, UE), the relay node forwards the uplink signal. To improve relay performance, the relay node uses different working modes when amplifying the uplink signal and the downlink signal. In this case, the relay node needs to accurately determine time windows for uplink forwarding and downlink forwarding performed by the relay node.

Currently, the relay node may determine a time division duplex (time division duplex, TDD) configuration of the base station through envelope detection, to adjust a corresponding working mode. However, precision of the envelope detection is limited, and an uplink-downlink transmission boundary cannot be accurately determined, resulting in a performance loss.

### SUMMARY

This application provides a relay communication method and apparatus, to resolve a problem of low accuracy of determining an uplink-downlink configuration through envelope detection in a conventional technology.

According to a first aspect, an embodiment of this application provides a relay communication method, including: A relay device receives first information sent by a host device, where the first information is used to determine whether the relay device turns on an amplify-and-forward function on a first time domain resource unit in a first time domain resource set, the first time domain resource set includes one or more time domain resource units, and the first time domain resource unit is any time domain resource unit in the first time domain resource set. The relay device performs relay forwarding based on the first information.

In this embodiment of this application, the host device indicates, by using the first information, a time domain resource unit on which the relay device turns on/turns off the amplify-and-forward function, so that the relay device can accurately determine an uplink-downlink transmission boundary, to reduce impact of interference noise, and further improve communication quality.

After the relay device obtains a TDD configuration of uplink-downlink transmission, the relay device performs uplink amplification and forwarding in an uplink slot (or symbol), and performs downlink amplification and forwarding in a downlink slot (or symbol). However, when the host device does not schedule UE served by the relay device, continuous working of the relay device may cause amplification of interference noise, causing interference to receiving by the host device or the UE. Uplink amplification is used as an example. In some uplink slots, no UE served by the relay device is scheduled by the host device. That is, no UE performs uplink sending. In this case, an amplified uplink signal of the relay device includes only interference noise, causing interference to uplink reception by a network device. However, in this embodiment of this application, the host device indicates, to the relay device, a time window in which relay forwarding is turned on/turned off, so that the relay device does not amplify and forward a received signal in the time window in which relay forwarding is turned off. This can avoid a case in which when the host device does not schedule a terminal device served by the relay device, the relay device amplifies and forwards a received interference signal, causing interference to receiving by the host device and the terminal device, and can reduce power consumption of the relay device.

In a possible design, the first information may indicate to turn off the amplify-and-forward function on the first time domain resource unit, or the first information indicates to turn on the amplify-and-forward function on the first time domain resource unit. In the foregoing design, when the first information indicates the amplify-and-forward function, a forwarding direction may not be distinguished.

In a possible design, the first information includes at least one of the following information: an off pattern of the first time domain resource set and an on pattern of the first time domain resource set. The off pattern indicates a position of a time domain resource unit on which the amplify-and-forward function is in an off state in the first time domain resource set. The on pattern indicates a position of a time domain resource unit on which the amplify-and-forward function is in an on state in the first time domain resource set.

In a possible design, that the relay device performs relay forwarding based on the first information includes: When the first information indicates to turn off the amplify-and-forward function on the first time domain resource unit, the relay device turns off the amplify-and-forward function on the first time domain resource unit. The amplify-and-forward function of the relay device includes uplink amplification and forwarding and downlink amplification and forwarding. In the foregoing design, when the first information indicates to turn off the amplify-and-forward function, a forwarding direction is not distinguished, and the relay device may turn off the uplink amplification and forwarding and the downlink amplification and forwarding.

In a possible design, that the relay device performs relay forwarding based on the first information includes: When the first information indicates to turn on the amplify-and-forward function on the first time domain resource unit, and if the first time domain resource unit is configured for uplink transmission, the relay device turns on an uplink amplify-and-forward function on the first time domain resource unit. If the first time domain resource unit is configured for downlink transmission, the relay device turns on a downlink amplify-and-forward function on the first time domain resource unit. Alternatively, if the first time domain resource unit includes at least one first time domain resource subunit and at least one second time domain resource subunit, the first time domain resource subunit is configured for uplink transmission, and the second time domain resource subunit is configured for downlink transmission, the relay device turns on an uplink amplify-and-forward function on the at least one first time domain resource subunit, and turns on a downlink amplify-and-forward function on the at least one second time domain resource subunit. According to the foregoing design, when the first information indicates to turn on the amplify-and-forward function, a forwarding direction is not distinguished, and the relay device may turn on the amplify-and-forward function in a corresponding forwarding direction.

In a possible design, the first information indicates at least one of the following information: a status of an uplink amplify-and-forward function on the first time domain resource unit, and a status of a downlink amplify-and-forward function on the first time domain resource unit. The amplify-and-forward function of the relay device includes uplink amplification and forwarding and downlink amplification and forwarding. In the foregoing design, when the first information indicates to turn off the amplify-and-forward function, a forwarding direction is distinguished, and the relay device may control to turn on or turn off the amplify-and-forward function in a corresponding forwarding direction.

In a possible design, the first information includes at least one of the following information: first sub information and second sub information, where the first sub information indicates the status of the uplink amplify-and-forward function on the first time domain resource unit, and the second sub information indicates the status of the downlink amplify-and-forward function on the first time domain resource unit. According to the foregoing design, the first information may separately indicate the status of the uplink amplify-and-forward function and the status of the downlink amplify-and-forward function.

In a possible design, the first information includes at least one of a first indication state, a second indication state, a third indication state, and a fourth indication state. The first indication state indicates that both the uplink amplify-and-forward function and the downlink amplify-and-forward function on the first time domain resource unit are in an on state. The second indication state indicates that the uplink amplify-and-forward function on the first time domain resource unit is in an off state, and the downlink amplify-and-forward function is in the on state. The third indication state indicates that the uplink amplify-and-forward function on the first time domain resource unit is in the on state, and the downlink amplify-and-forward function is in the off state. The fourth indication state indicates that both the uplink amplify-and-forward function and the downlink amplify-and-forward function on the first time domain resource unit are in the off state. According to the foregoing design, the first information may jointly indicate the status of the uplink amplify-and-forward function and the status of the downlink amplify-and-forward function.

In a possible design, the first time domain resource unit includes at least one first time domain resource subunit and at least one second time domain resource subunit, the first time domain resource subunit is configured for uplink transmission, and the second time domain resource subunit is configured for downlink transmission. That the relay device performs relay forwarding based on the first information includes: If the first information indicates that the uplink amplify-and-forward function on the first time domain resource unit is to be in the off state, the relay device turns off the uplink amplify-and-forward function on the at least one first time domain resource subunit; or if the first information indicates that the uplink amplify-and-forward function on the first time domain resource unit is to be in the on state, the relay device turns on the uplink amplify-and-forward function on the at least one first time domain resource subunit. According to the foregoing design, the relay device may ignore an indication of the downlink amplify-and-forward function on a time domain resource used for uplink transmission, and may ignore an indication of the uplink amplify-and-forward function on a time domain resource used for downlink transmission.

In a possible design, the first time domain resource unit includes at least one first time domain resource subunit and at least one second time domain resource subunit, the first time domain resource subunit is configured for uplink transmission, and the second time domain resource subunit is configured for downlink transmission. That the relay device performs relay forwarding based on the first information includes: If the first information indicates that the downlink amplify-and-forward function on the first time domain resource unit is to be in the off state, the relay device turns off the downlink amplify-and-forward function on the at least one second time domain resource subunit; or if the first information indicates that the downlink amplify-and-forward function on the first time domain resource unit is to be in the on state, the relay device amplifies a downlink signal from the host device and forwards the amplified downlink signal to a terminal device on the at least one second time domain resource subunit. According to the foregoing design, the relay device may ignore an indication of the uplink amplify-and-forward function on a time domain resource used for downlink transmission, and may ignore an indication of the downlink amplify-and-forward function on a time domain resource used for uplink transmission.

In a possible design, that the relay device performs relay forwarding based on the first information includes: when the first information indicates that the amplify-and-forward function on the first time domain resource unit is to be in the off state, the relay device turns on the amplify-and-forward function on a time domain resource of a specific signal, where the first time domain resource unit includes the time domain resource of the specific signal. In the foregoing manner, the relay device can implement basic coverage.

In a possible design, the specific signal includes at least one of the following signals: a synchronization signal/physical broadcast channel block, a system information block 1-physical downlink control channel, a system information block 1-physical downlink shared channel, a channel state information reference signal, a tracking reference signal, a physical random access channel, and a sounding reference signal.

In a possible design, before the relay device performs relay forwarding based on the first information, the method further includes: The relay device receives second information, where the second information indicates at least one of the following information: a start position of uplink transmission in a first periodicity, an end position of uplink transmission in the first periodicity, a start position of downlink transmission in the first periodicity, and an end position of downlink transmission in the first periodicity. The relay device determines, based on the second information, a time domain resource used for uplink forwarding and a time domain resource used for downlink forwarding in the first time domain resource set, where the first time domain resource set includes one or more time domain resources in the first periodicity. According to the foregoing design, the relay device can control to turn on/turn off the amplify-and-forward function in a corresponding forwarding direction.

In a possible design, before the relay device performs relay forwarding based on the first information, the method further includes: The relay device receives a TDD configuration sent by the host device. The TDD configuration indicates a time domain resource subunit of a downlink type, a time domain resource subunit of an uplink type, and a time domain resource subunit of a flexible type in a TDD periodicity. The TDD periodicity includes one or more time domain resource units, any time domain resource unit in the TDD periodicity includes a plurality of time domain resource subunits, and the first time domain resource set includes one or more TDD periodicities. The relay device determines, based on the TDD configuration, a time domain resource subunit used for uplink transmission and a resource time domain resource subunit used for downlink transmission in the first time-frequency resource set. According to the foregoing design, the host device and the relay device can reuse a TDD configuration manner between a base station and a terminal device.

In a possible design, before the relay device performs relay forwarding based on the first information, the method further includes: The relay device receives an uplink forwarding timing advance sent by the host device. According to the foregoing design, the relay device can obtain timing start positions of uplink transmission and downlink transmission.

In a possible design, before the relay device performs relay forwarding based on the first information, the method further includes: The relay device determines an uplink forwarding timing advance based on an initial advance. According to the foregoing design, noise interference caused because a start moment of uplink amplification and forwarding is earlier than a start position of an uplink transmission time window can be avoided.

In a possible design, before the relay device performs relay forwarding based on the first information, the method further includes: The relay device determines an uplink forwarding timing advance based on an interval of switching from downlink forwarding to uplink forwarding and a guard period between a time domain resource used for downlink transmission and a time domain resource used for uplink transmission. According to the foregoing design, noise interference caused because an end moment of uplink amplification and forwarding is later than an end position of an uplink transmission time window can be avoided.

In a possible design, before the relay device performs relay forwarding based on the first information, the method further includes: For a start position of uplink transmission, the relay device determines an uplink forwarding timing advance based on an interval of switching from downlink forwarding to uplink forwarding and a guard period between a time domain resource used for downlink transmission and a time domain resource used for uplink transmission. For an end position of the uplink transmission, the relay device determines an uplink forwarding timing advance based on an initial advance. According to the foregoing design, noise interference caused because a start moment of uplink amplification and forwarding is earlier than a start position of an uplink transmission time window can be avoided, and noise interference caused because an end moment of the uplink amplification and forwarding is later than an end position of the uplink transmission time window can be avoided.

According to a second aspect, an embodiment of this application provides a relay communication method, including: A host device determines first information, where the first information is used to determine whether a relay device turns on an amplify-and-forward function on a first time domain resource unit in a first time domain resource set, the first time domain resource set includes one or more time domain resource units, and the first time domain resource unit is any time domain resource unit in the first time domain resource set. The host device sends the first information to the relay device.

In this embodiment of this application, the host device indicates, by using the first information, a time domain resource unit on which the relay device turns on/turns off the amplify-and-forward function, so that the relay device can accurately determine an uplink-downlink transmission boundary, to reduce impact of interference noise, and further improve communication quality.

After the relay device obtains a TDD configuration of uplink-downlink transmission, the relay device performs uplink amplification and forwarding in an uplink slot (or symbol), and performs downlink amplification and forwarding in a downlink slot (or symbol). However, when the host device does not schedule UE served by the relay device, continuous working of the relay device may cause amplification of interference noise, causing interference to receiving by the host device or the UE. Uplink amplification is used as an example. In some uplink slots, no UE served by the relay device is scheduled by the host device. That is, no UE performs uplink sending. In this case, an amplified uplink signal of the relay device includes only interference noise, causing interference to uplink reception by a network device. However, in this embodiment of this application, the host device indicates, to the relay device, a time window in which relay forwarding is turned on/turned off, so that the relay device does not amplify and forward a received signal in the time window in which relay forwarding is turned off. This can avoid a case in which when the host device does not schedule a terminal device served by the relay device, the relay device amplifies and forwards a received interference signal, causing interference to receiving by the host device and the terminal device, and can reduce power consumption of the relay device.

In a possible design, the first information may indicate to turn off the amplify-and-forward function on the first time domain resource unit, or the first information indicates to turn on the amplify-and-forward function on the first time domain resource unit. In the foregoing design, when the first information indicates the amplify-and-forward function, a forwarding direction may not be distinguished.

In a possible design, the first information includes at least one of the following information: an off pattern of the first time domain resource set and an on pattern of the first time domain resource set. The off pattern indicates a position of a time domain resource unit on which the amplify-and-forward function is in an off state in the first time domain resource set. The on pattern indicates a position of a time domain resource unit on which the amplify-and-forward function is in an on state in the first time domain resource set.

In a possible design, the first information indicates at least one of the following information: a status of an uplink amplify-and-forward function on the first time domain resource unit, and a status of a downlink amplify-and-forward function on the first time domain resource unit. The amplify-and-forward function of the relay device includes uplink amplification and forwarding and downlink amplification and forwarding. In the foregoing design, when the first information indicates to turn off the amplify-and-forward function, a forwarding direction is distinguished, and the relay device may control to turn on or turn off the amplify-and-forward function in a corresponding forwarding direction.

In a possible design, the first information includes at least one of the following information: first sub information and second sub information, where the first sub information indicates the status of the uplink amplify-and-forward function on the first time domain resource unit, and the second sub information indicates the status of the downlink amplify-and-forward function on the first time domain resource unit. According to the foregoing design, the first information may separately indicate the status of the uplink amplify-and-forward function and the status of the downlink amplify-and-forward function.

In a possible design, the first information includes at least one of a first indication state, a second indication state, a third indication state, and a fourth indication state. The first indication state indicates that both the uplink amplify-and-forward function and the downlink amplify-and-forward function on the first time domain resource unit are in an on state. The second indication state indicates that the uplink amplify-and-forward function on the first time domain resource unit is in an off state, and the downlink amplify-and-forward function is in the on state. The third indication state indicates that the uplink amplify-and-forward function on the first time domain resource unit is in the on state, and the downlink amplify-and-forward function is in the off state. The fourth indication state indicates that both the uplink amplify-and-forward function and the downlink amplify-and-forward function on the first time domain resource unit are in the off state. According to the foregoing design, the first information may jointly indicate the status of the uplink amplify-and-forward function and the status of the downlink amplify-and-forward function.

In a possible design, the host device may further send a TDD configuration to the relay device. The TDD configuration indicates a time domain resource subunit of a downlink type, a time domain resource subunit of an uplink type, and a time domain resource subunit of a flexible type in a TDD periodicity. The TDD periodicity includes one or more time domain resource units, any time domain resource unit in the TDD periodicity includes a plurality of time domain resource subunits, and the first time domain resource set includes one or more TDD periodicities. According to the foregoing design, the host device and the relay device can reuse a TDD configuration manner between a base station and a terminal device.

In a possible design, the host device sends second information to the relay device, where the second information indicates at least one of the following information: a start position of uplink transmission in a first periodicity, an end position of uplink transmission in the first periodicity, a start position of downlink transmission in the first periodicity, and an end position of downlink transmission in the first periodicity, where the first time domain resource set includes one or more time domain resources in the first periodicity. According to the foregoing design, the relay device can control to turn on/turn off the amplify-and-forward function in a corresponding forwarding direction.

In a possible design, the host device may further send an uplink forwarding timing advance to the relay device. According to the foregoing design, the relay device can obtain timing start positions of uplink transmission and downlink transmission.

According to a third aspect, this application provides a communication apparatus. The apparatus may be a communication device, or may be a chip or a chip set in the communication device. The communication device may be a host device or may be a relay device. The apparatus may include a processing unit and a transceiver unit. When the apparatus is the communication device, the processing unit may be a processor, and the transceiver unit may be a transceiver. The apparatus may further include a storage module, and the storage module may be a memory. The storage module is configured to store instructions, and the processing unit executes the instructions stored in the storage module, so that the relay device performs the corresponding function in the first aspect, or the processing unit executes the instructions stored in the storage module, so that the host device performs the corresponding function in the second aspect. When the apparatus is the chip or the chip set in the communication device, the processing unit may be a processor, and the transceiver unit may be an input/output interface, pin, circuit, or the like. The processing unit executes instructions stored in a storage module, so that the relay device performs the corresponding function in the first aspect, or the processing unit executes instructions stored in a storage module, so that the host device performs the corresponding function in the second aspect. The storage module may be a storage module (for example, a register or a cache) in the chip or the chip set, or may be a storage module (for example, a read-only memory or a random access memory) outside the chip or the chip set in the base station.

According to a fourth aspect, an embodiment of this application provides a communication apparatus. The apparatus includes a communication interface and a processor. The communication interface is configured for communication between the apparatus and another device, for example, data or signal receiving and sending. For example, the communication interface may be a transceiver, a circuit, a bus, a module, or an interface of another type, and the another device may be an upper-level node (for example, a host device or another relay device). The processor is configured to invoke a group of programs, instructions, or data, to perform the method described in the first aspect or the possible designs of the first aspect. The apparatus may further include a memory, configured to store the programs, instructions, or data invoked by the processor. The memory is coupled to the processor. When executing the instructions or the data stored in the memory, the processor may implement the method described in the first aspect or the possible designs of the first aspect.

According to a fifth aspect, an embodiment of this application provides a communication apparatus. The apparatus includes a communication interface and a processor. The communication interface is configured for communication between the apparatus and another device, for example, data or signal receiving and sending. For example, the communication interface may be a transceiver, a circuit, a bus, a module, or an interface of another type, and the another device may be a lower-level node (for example, a terminal device or another relay device). The processor is configured to invoke a group of programs, instructions, or data, to perform the method described in the second aspect or the possible designs of the second aspect. The apparatus may further include a memory, configured to store the programs, instructions, or data invoked by the processor. The memory is coupled to the processor. When executing the instructions or the data stored in the memory, the processor may implement the method described in the second aspect or the possible designs of the second aspect.

According to a sixth aspect, an embodiment of this application further provides a computer-readable storage medium. The computer-readable storage medium stores computer-readable instructions, and when the computer-readable instructions are run on a computer, the method in the first aspect, the second aspect, the possible designs of the first aspect, or the possible designs of the second aspect is performed.

According to a seventh aspect, an embodiment of this application provides a chip system. The chip system includes a processor, may further include a memory, and is configured to implement the method in the first aspect, the second aspect, the possible designs of the first aspect, or the possible designs of the second aspect. The chip system may include a chip, or may include a chip and another discrete component.

According to an eighth aspect, an embodiment of this application provides a communication system. The system includes a host device and a relay device, the relay device is configured to perform the method in the first aspect or the possible designs of the first aspect, and the host device is configured to perform the method in the second aspect or the possible designs of the second aspect.

According to a ninth aspect, a computer program product including instructions is provided. When the computer program product is run on a computer, the method in the first aspect, the second aspect, the possible designs of the first aspect, or the possible designs of the second aspect is performed.

According to a tenth aspect, an embodiment of this application provides a communication apparatus. The communication apparatus includes a processor, a memory, and a transceiver. The transceiver is configured to receive a signal or send a signal. The memory is configured to store program code or instructions. The processor is configured to invoke the program code or the instructions from the memory to perform the method in the first aspect.

According to an eleventh aspect, an embodiment of this application provides a communication apparatus. The communication apparatus includes a processor, a memory, and a communication interface. The communication interface is configured to receive a signal or send a signal. The memory is configured to store program code or instructions. The processor is configured to invoke the program code or the instructions from the memory to perform the method in the second aspect.

According to a twelfth aspect, an embodiment of this application provides a communication apparatus. The communication apparatus includes a processor and an interface circuit. The interface circuit is configured to receive computer program code or instructions and transmit the computer program code or the instructions to the processor. The processor runs the computer program code or the instructions to perform the corresponding method in the first aspect.

According to a thirteenth aspect, an embodiment of this application provides a communication apparatus. The communication apparatus includes a processor and an interface circuit. The interface circuit is configured to receive computer program code or instructions and transmit the computer program code or the instructions to the processor. The processor runs the computer program code or the instructions to perform the corresponding method in the second aspect.

According to a fourteenth aspect, an embodiment of this application provides a communication apparatus. For example, the communication apparatus may be a chip, and the communication apparatus includes a logic circuit and an input/output interface. The input/output interface is used by the apparatus to communicate with another device, for example, to input configuration information. The logic circuit is configured to run computer program code or instructions to perform the corresponding method in the first aspect.

According to a fifteenth aspect, an embodiment of this application provides a communication apparatus. For example, the communication apparatus may be a chip, and the communication apparatus includes a logic circuit and an input/output interface. The input/output interface is used by the apparatus to communicate with another device, for example, to output configuration information. The logic circuit is configured to run computer program code or instructions to perform the corresponding method in the second aspect.

For technical effects brought by any implementation of the third aspect to the fifteenth aspect, refer to beneficial effects in the corresponding method provided above. Details are not described herein again.

### BRIEF DESCRIPTION OF DRAWINGS

FIG. 1 is a diagram of an architecture of a communication system according to an embodiment of this application;
FIG. 2 is a specific example diagram of a communication system according to an embodiment of this application;
FIG. 3 is a schematic diagram of a structure of a relay device according to an embodiment of this application;
FIG. 4 is a schematic diagram of an antenna structure of a relay device according to an embodiment of this application;
FIG. 5 is a schematic diagram of communication performed by a relay device through an antenna according to an embodiment of this application;
FIG. 6 is a schematic flowchart of a relay communication method according to an embodiment of this application;
FIG. 7 is a schematic diagram of a downlink amplification timing according to an embodiment of this application;
FIG. 8 is a schematic diagram of an uplink amplification timing according to an embodiment of this application;
FIG. 9 is a schematic diagram of an off pattern according to an embodiment of this application;
FIG. 10 is a schematic diagram of an on pattern according to an embodiment of this application;
FIG. 11 is a schematic diagram of an amplify-and-forward function when first information indicates a first indication state according to an embodiment of this application;
FIG. 12 is a schematic diagram of an amplify-and-forward function when first information indicates a second indication state according to an embodiment of this application;
FIG. 13 is a schematic diagram of an amplify-and-forward function when first information indicates a third indication state according to an embodiment of this application;
FIG. 14 is a schematic diagram of an amplify-and-forward function when first information indicates a fourth indication state according to an embodiment of this application;
FIG. 15 is a schematic diagram of a structure of a communication apparatus according to an embodiment of this application;
FIG. 16 is a schematic diagram of a structure of a communication apparatus according to an embodiment of this application;
FIG. 17 is a schematic diagram of a structure of a relay device according to an embodiment of this application;
FIG. 18 is a schematic diagram of a structure of a host device according to an embodiment of this application; and
FIG. 19 is a schematic diagram of a structure of a chip according to an embodiment of this application.

### DESCRIPTION OF EMBODIMENTS

The following describes technical solutions of this application with reference to accompanying drawings.

Names of all nodes and messages in this application are merely names that are set for ease of description, and names in an actual network may be different. It should not be understood that names of various nodes and messages are limited in this application. On the contrary, any name having a function the same as or similar to that of a node or a message used in this application is considered as a method or an equivalent replacement of this application, and shall fall within the protection scope of this application. Details are not described below.

A communication system described in embodiments of this application includes but is not limited to: a narrow band internet of things (narrow band-internet of things, NB-IoT) system, a wireless local area network (wireless local access network, WLAN) system, a long term evolution (long term evolution, LTE) system, a fifth generation mobile communication (5th generation mobile networks or 5th generation wireless systems, 5G) system, or a communication system after 5G, for example, a communication system of a new radio (new radio, NR) system.

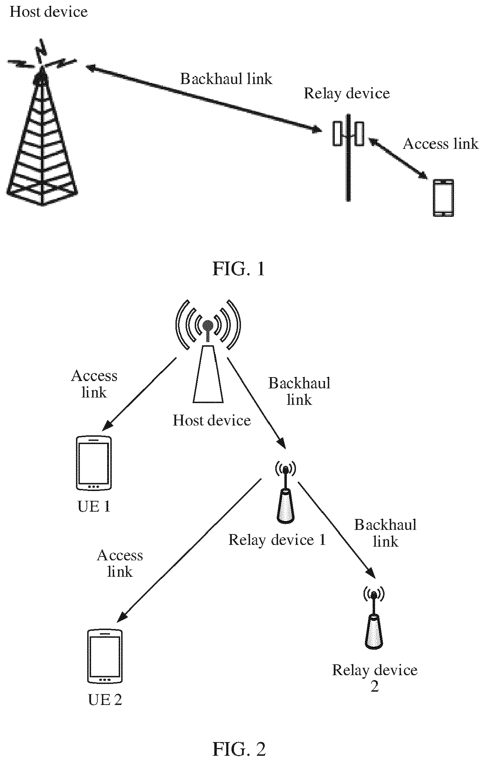

To better understand embodiments of the present invention, the following first describes a network architecture used in embodiments of the present invention. Embodiments of this application may be applied to a communication system having a relay device. For example, as shown in FIG. 1, a communication system applicable to the technical solution of this application may include a host device, a relay device, and a terminal device. It should be understood that FIG. 1 is merely an example for description, and does not specifically limit quantities of host devices, relay devices, and terminal devices included in a communication system.

The host device may be a device that provides an interface between the terminal device and a core network, for example, may be an access network device. The access network device is configured to connect the terminal device to a wireless network. The access network device may be referred to as a base station, or may be referred to as a radio access network (radio access network, RAN) node (or device). For example, the access network device may be a next-generation NodeB (next-generation NodeB, gNB), a transmission reception point (transmission reception point, TRP), an evolved NodeB (evolved NodeB, eNB), or a radio network controller (radio network controller, RNC), a NodeB (NodeB, NB), a base station controller (base station controller, BSC), a base transceiver station (base transceiver station, BTS), and a home base station (for example, a home evolved NodeB, or home NodeB, HNB), a base band unit (base band unit, BBU), or a wireless fidelity (wireless fidelity, Wi-Fi) access point (access point, AP).

For example, the access network device may be divided into a central unit (central unit, CU) and at least one distributed unit (distributed unit, DU). The CU may be configured to manage or control the at least one DU, or in other words, the CU is connected to the at least one DU. In this structure, protocol layers of a radio access network device in the communication system may be split. Some protocol layers are controlled by the CU in a centralized manner, functions of some or all of remaining protocol layers are distributed in the DU, and the CU controls the DU in a centralized manner. For example, the radio access network device is a gNB. Protocol layers of the gNB include a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical layer. For example, the CU may be configured to implement functions of the RRC layer, the SDAP layer, and the PDCP layer, and the DU may be configured to implement functions of the RLC layer, the MAC layer, and the physical layer. Protocol stacks included in the CU and the DU are not specifically limited in embodiments of this application.

For example, the CU in embodiments of this application may be further divided into one control plane (CU-control plane, CU-CP) network element and a plurality of user plane (CU-user plane, CU-UP) network elements. The CU-CP may be used for control plane management, and the CU-UP may be used for user plane data transmission. An interface between the CU-CP and the CU-UP may be an E1 interface. An interface between the CU-CP and the DU may be F1-C, and is used for control plane signaling transmission. An interface between the CU-UP and the DU may be F1-U, and is used for user plane data transmission. The CU-UP and the CU-UP may be connected through an Xn-U interface, to perform user plane data transmission.

The terminal device includes but is not limited to any one of user equipment (user equipment, UE), a mobile console, an access terminal, a subscriber unit, a subscriber station, a mobile station, a remote station, a remote terminal, a mobile device, a terminal, a wireless communication device, a user agent, a station (station, ST) in a wireless local area network (wireless local access network, WLAN), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a mobile console in a future 5G network, and a terminal device in a future evolved public land mobile network (public land mobile network, PLMN) network.

The relay device is a communication device having a forwarding function. The relay device may be an access network device, may be a terminal device, may be an independent device form, may be a vehicle-mounted device, or may be an apparatus disposed on a mobile object. A name of the relay device may be a relay node (relay node, RN), a relay transmission reception point (relay transmission reception point, rTRP), an integrated access and backhaul (integrated access and backhaul, IAB) node (IAB node), a repeater, an intelligent reflecting surface, or the like. An upper-level node of the relay device may be a host device (including a gNB, a gNB-DU, a gNB-CU, and the like), or may be another relay device. A lower-level node of the relay device may be another relay device, or may be a terminal device.

It should be understood that in this application, the relay device may generally refer to any node or device having a relay function.

In addition, this application further relates to the following basic terms or concepts.

Access link (access link): a link between a relay device and a terminal device directly served by a relay device through a radio link, or a link between a host device and a terminal directly served by a host device through a radio link. The access link includes an uplink access link and a downlink access link. The uplink access link is also referred to as uplink transmission of the access link, and the downlink access link is also referred to as downlink transmission of the access link.

Backhaul link (backhaul link): a link between a relay device and an upper-level node (that is, a parent node) of the relay device. In this case, the relay device serves as a lower-level node (that is, a child node) of the parent node of the relay device. It should be understood that a parent node of a relay device may be another relay device, or may be a host device. Transmission of data from the relay device to the parent node of the relay device is referred to as uplink transmission of the backhaul link. Transmission of data from the parent node of the relay device to the relay device is referred to as downlink transmission of the backhaul link.

TDD configuration: The TDD configuration includes configuration information of a type of each slot/symbol in a TDD configuration periodicity, and the TDD configuration periodicity may include one or more slots. Types of the slot/symbols may include downlink (Downlink), uplink (Uplink), and flexible (flexible). For ease of description, in embodiments of this application, a symbol of a downlink type is referred to as a downlink symbol, a symbol of an uplink type is referred to as an uplink symbol, and a symbol of a flexible type is referred to as a flexible symbol. A slot of a downlink type or a slot including symbols that are all downlink symbols is referred to as a downlink slot. A slot of an uplink type or a slot including symbols that are all uplink symbols is referred to as an uplink slot. A slot of a flexible type or a slot including symbols that are all flexible symbols is referred to as a flexible slot.

The uplink slot/symbol is used for uplink transmission, and a terminal device may send an uplink signal in the uplink slot/symbol. The downlink slot/symbol is used for downlink transmission, and the terminal device may receive a downlink signal in the downlink slot/symbol. Use of the flexible slot/symbol depends on an indication of a network device, and may be indicated as being used for uplink transmission, or may be indicated as being used for downlink transmission. In an embodiment, in one TDD configuration periodicity, a start slot/symbol of the TDD configuration periodicity may be a downlink slot/symbol, and an end slot/symbol may be an uplink slot/symbol. A flexible slot/symbol is used between the downlink slot/symbol and the uplink slot/symbol.

It should be understood that one relay device may be connected to one upper-level node, or may be connected to a plurality of upper-level nodes. That is, a plurality of upper-level nodes may simultaneously provide services for one relay device.

FIG. 2 is a specific example of a communication system. The communication system shown in FIG. 2 includes a host device, a relay device 1, a relay device 2, UE 1, and UE 2. A link between the host device and the relay device 1 and a link between the relay device 1 and the relay device 2 are backhaul links. A link between the UE 1 and the host device and a link between the UE 2 and the relay device 1 are access links.

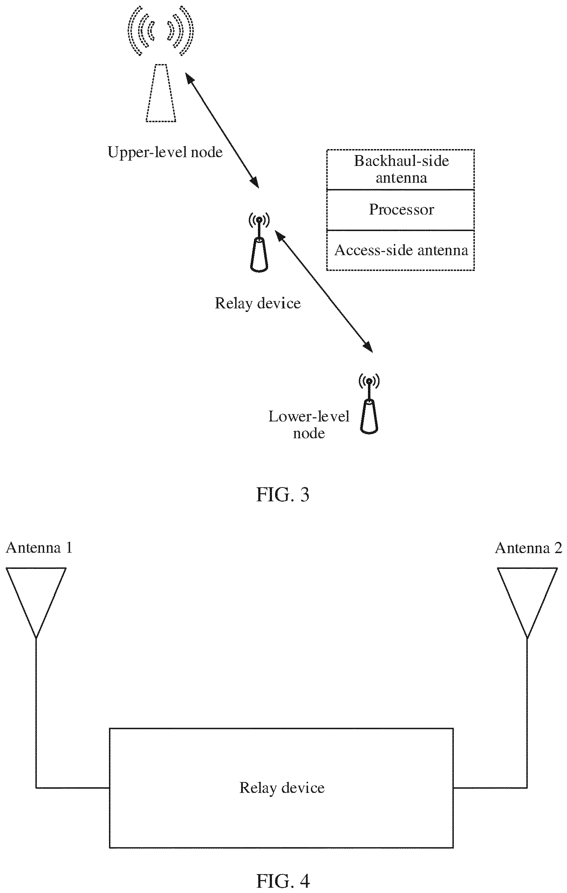

FIG. 3 is a schematic diagram of a structure of a relay device. The relay device may include a backhaul-side antenna (array), an access-side antenna (array), and a processor. The backhaul-side antenna (array) performs communication between the relay device and an upper-level node (for example, another relay device or a host device). The access-side antenna (array) performs communication between the relay node and a lower-level node (for example, another relay device or a terminal device). The processor performs a power amplification operation on a received signal. It should be understood that the processor of the relay device may further have other functions, such as interference cancellation, filtering, baseband processing, and amplification control.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of new service scenarios, the technical solutions provided in embodiments of this application are also applicable to similar technical problems.

In wireless and mobile communication, to obtain a larger transmission bandwidth, a mobile communication system uses a spectrum resource of a higher carrier frequency. Although a high frequency band can provide more spectrum resources, an electromagnetic wave of the high frequency band also has disadvantages such as large propagation attenuation and a weak diffraction capability. Therefore, it is more difficult for a communication system deployed in the high frequency band to implement full coverage of an area. That is, a coverage hole may occur. Typical coverage holes include areas blocked by buildings, indoor areas, and the like. To resolve a coverage problem in the communication system, a relay device may be deployed in the communication system. The relay device may forward, to a terminal device, a downlink signal sent by a host device, or may forward, to the host device, an uplink signal sent by the terminal device.

Currently, typical relay devices include two types: an amplify-and-forward (amplify-and-forward, AF) relay device and a decode-and-forward (decode-and-forward, DF) relay device. The AF relay device performs power amplification on a received signal (for example, a downlink signal sent by an upper-level node or an uplink signal sent by a lower-level node) and forwards the uplink signal obtained after the power amplification. Because the signal received by the relay device includes noise and interference, and the relay device may also generate noise, the AF relay device amplifies the noise and the interference while amplifying the signal. This affects quality of the forwarded signal. The AF relay device is also referred to as a repeater, an RF relay, RF IAB, a layer 1 (layer 1, L1) relay, L1-IAB, an amplifier, a repeater (repeater), or the like. Alternatively, the relay device may include a device that directly performs reflection and forwarding on a signal, for example, an intelligent reflecting surface (intelligent reflecting surface, IRS).

For example, the relay device may include two or two groups of antennas. For example, as shown in FIG. 4, the relay device includes an antenna 1 and an antenna 2. During downlink amplification, the AF relay device may receive, through the antenna 1, a downlink signal sent by an upper-level node of the AF relay device, and send the downlink signal obtained after power amplification through the antenna 2. Correspondingly, a lower-level node of the AF relay device receives the amplified signal sent by the AF relay device through the antenna 2. During uplink amplification, the AF relay device receives, through the antenna 2, an uplink signal sent by the lower-level node of the AF relay device, and sends the uplink signal obtained after power amplification through the antenna 1. Correspondingly, the upper-level node of the AF relay device receives the amplified signal sent by the AF relay device through the antenna 1. It can be learned from the foregoing that the AF relay device uses different working modes in uplink amplification and downlink amplification. Therefore, time windows for performing uplink forwarding and downlink forwarding by the AF relay device need to be accurately determined.

Currently, the AF relay device may determine an uplink-downlink time division duplex (time division duplex, TDD) configuration through envelope detection, to determine time windows for uplink forwarding and downlink forwarding, and may further adjust a working mode based on the time windows for uplink forwarding and downlink forwarding.

However, precision of envelope detection is limited, and time domain boundaries of uplink and downlink transmission cannot be accurately determined. As a result, the relay device cannot accurately determine the time windows for uplink forwarding and downlink forwarding, causing a performance loss.

Based on this, embodiments of this application provide a relay communication method and apparatus. The method and the apparatus are based on a same technical idea. Because a problem-resolving principle of the method is similar to a problem-resolving principle of the apparatus, mutual reference may be made to implementation of the apparatus and the method. Repeated parts are not described in detail.

It should be understood that, in embodiments of this application, "at least one" means one or more, and "a plurality of" means two or more. "At least one of the following pieces (items)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

In this embodiment of this application, it should be understood that "turning off an amplify-and-forward function", "the amplify-and-forward function is in an off state", "not performing amplification and forwarding", and "the amplify-and-forward function is turned off" have similar meanings. For example, that a relay device turns off an uplink amplify-and-forward function may be understood as: the uplink amplify-and-forward function of the relay device is in the off state, or may be understood as: the relay device does not perform uplink amplification and forwarding, or may be understood as: the uplink amplify-and-forward function of the relay device is turned off. For another example, that the relay device turns off a downlink amplify-and-forward function may be understood as: the downlink amplify-and-forward function of the relay device is in the off state, or may be understood as: the relay device does not perform downlink amplification and forwarding, or may be understood as: the downlink amplify-and-forward function of the relay device is turned off.

It should be understood that "turning on an amplify-and-forward function", "the amplify-and-forward function is in an on state", "performing amplification and forwarding", and "the amplify-and-forward function is turned on" have similar meanings. For example, that the relay device turns on an uplink amplify-and-forward function may be understood as: the uplink amplify-and-forward function of the relay device is in the on state, or may be understood as: the relay device performs uplink amplification and forwarding, or may be understood as: the uplink amplify-and-forward function of the relay device is turned on, or may be understood as: the relay device receives a signal sent by a lower-level node of the relay device, performs power amplification on the signal, and sends the signal obtained after the power amplification to an upper-level node of the relay device. For another example, that the relay device turns on a downlink amplify-and-forward function may be understood as: the downlink amplify-and-forward function of the relay device is in the on state, or may be understood as: the relay device performs downlink amplification and forwarding, or may be understood as: the downlink amplify-and-forward function of the relay device is turned on, or may be understood as: the relay device receives a signal sent by an upper-level node of the relay device, performs power amplification on the signal, and sends the signal obtained after the power amplification to a lower-level node of the relay device.

In addition, it should be understood that, in the description of this application, terms "first" and "second" are only used to distinguish the purpose of the description, but cannot be understood as indication or implication of relative importance, and cannot be understood as an indication or implication of a sequence.

The method provided in embodiments of this application may be applied to the relay device. An upper-level node of the relay device may be the host device or another relay device, and a lower-level node may be a terminal device or another relay device. This is not specifically limited herein.

The relay device in embodiments of this application may have a plurality of antenna panels. At least one of the plurality of antenna panels is configured to send a signal to the upper-level node or receive a signal sent by the upper-level node. At least one of the plurality of antenna panels is configured to send a signal to the lower-level node or receive a signal sent by the lower-level node.

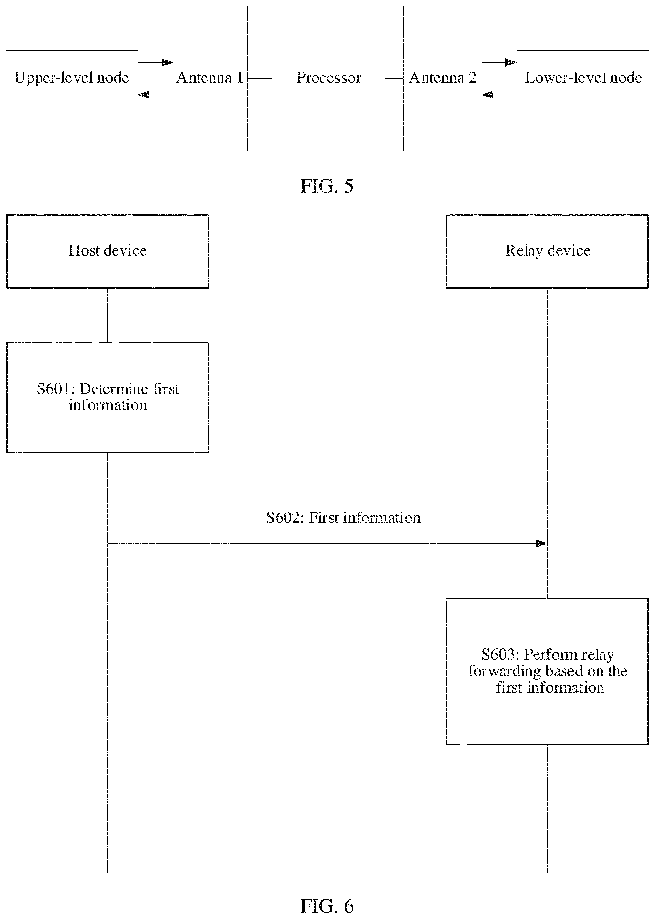

For example, as shown in FIG. 5, the relay device includes two antenna panels. An antenna panel 1 may communicate with the upper-level node of the relay device, for example, receive a downlink signal from the upper-level node of the relay device, or forward an uplink signal to the upper-level node of the relay device. An antenna panel 2 may communicate with the lower-level node, for example, receive an uplink signal sent by the lower-level node of the relay device, or forward a downlink signal to the lower-level node of the relay device. In some possible implementations, locations and functions of the two antenna panels may also be exchanged. A link between the relay node and the upper-level node of the relay node may be referred to as a backhaul link, and a link between the relay node and the lower-level node of the relay node may be referred to as an access link.

A downlink forwarding process of the relay device is as follows: The relay device receives a downlink signal from the upper-level node of the relay device through the antenna panel 1, and sends, through the antenna panel 2, the downlink signal amplified by the processor. The lower-level node of the relay device receives the downlink signal amplified by the relay device. The lower-level node may be a terminal device, or may be another device, for example, another relay device.

An uplink forwarding process of the relay device is as follows: The relay device receives a signal through the antenna panel 2, and sends, to the upper-level node of the relay device through the antenna panel 1, the signal amplified by the processor. The upper-level node of the relay device receives the uplink signal amplified by the relay device. It should be understood that for uplink forwarding and downlink forwarding, the processor may further perform processing such as filtering and interference cancellation on the received signal.

The relay device has different working modes for downlink forwarding and uplink forwarding, and in typical implementation, the downlink forwarding and uplink forwarding cannot be performed simultaneously. Time windows in which the relay device performs uplink forwarding and downlink forwarding need to match TDD working modes of the host device and the terminal device. To be specific, the relay device performs downlink forwarding during downlink transmission, and the relay device performs uplink forwarding during uplink transmission.

To enable the relay device to receive control information sent by the host device, or enable the relay device to send or report information to the host device, the relay device and the host device may establish a bidirectional connection or a unidirectional connection. In this application, a link between the relay device and the host device is referred to as a control link. Optionally, the relay device may establish the control link to the host device through a backhaul-side antenna.

The following describes in detail embodiments of this application with reference to the accompanying drawings.

FIG. 6 is a flowchart of a relay communication method according to an embodiment of this application. The method includes the following steps.

S601: A host device determines first information. The first information is used to determine whether a relay device turns on an amplify-and-forward function on a first time domain resource unit in a first time domain resource set, the first time domain resource set includes one or more time domain resource units, and the first time domain resource unit is any time domain resource unit in the first time domain resource set.

For example, the amplify-and-forward function of the relay device includes an uplink amplify-and-forward function and a downlink amplify-and-forward function.

It should be noted that the host device may be an upper-level node of the relay device, or one or more relay devices may be deployed between the host device and the relay device, so that a downlink signal sent by the host device and an uplink signal sent by the relay device can be forwarded by the one or more relay devices.

In an implementation, the host device may determine the first information based on a scheduling status of a terminal device served by the relay device. For example, if no terminal device served by the relay device is scheduled on the first time domain resource unit, the first information may indicate the relay device to turn off the amplify-and-forward function on the first time domain resource unit. If at least one terminal device served by the relay device is scheduled on the first time domain resource unit, the first information may indicate the relay device to turn on the amplify-and-forward function on the first time domain resource unit.

For example, the first time domain resource set may include a time domain resource in periodicity duration. The periodicity duration may be indicated by the first information, may be indicated by other information, may be specified in a protocol, or the like. This is not specifically limited herein.

For example, a time domain resource unit may be, but is not limited to, a symbol, a slot, a frame, a subframe, or a symbol group.

In a possible implementation, the first time domain resource unit may correspond to a subcarrier spacing. For example, the relay device may determine a length of a symbol or a slot based on information about the subcarrier spacing. The subcarrier spacing may be configured by the host device for the relay device, or may use another existing subcarrier spacing, for example, a reference subcarrier spacing in a TDD configuration.

S602: The host device sends the first information to the relay device. Correspondingly, the relay device receives the first information from the host device.

In a possible implementation, one or more relay devices are deployed between the host device and the relay device, and the host device may send the first information to the relay device through the one or more relay devices. For example, a second relay device is deployed between the host device and the relay device. The second relay device is a lower-level node of the host device and is also an upper-level node of the relay device. The host device may send the first information to the second relay device, and the second relay device forwards the first information to the relay device.

For example, the host device may send the first information by using semi-static signaling such as RRC signaling and MAC layer signaling, or may send the first information by using dynamic signaling such as DCI.

S603: The relay device performs relay forwarding based on the first information.

In an implementation, the relay device may determine, based on the first information, whether to perform amplification and forwarding on the first time domain resource unit.

After the relay device obtains a TDD configuration of uplink-downlink transmission, the relay device performs uplink amplification and forwarding in an uplink slot (or symbol), and performs downlink amplification and forwarding in a downlink slot (or symbol). However, when the host device does not schedule UE served by the relay device, continuous working of the relay device may cause amplification of interference noise, causing interference to receiving by the host device or the UE. Uplink amplification is used as an example. In some uplink slots, no UE served by the relay device is scheduled by the host device. That is, no UE performs uplink sending. In this case, an amplified uplink signal of the relay device includes only interference noise, causing interference to uplink reception by a network device. However, in this embodiment of this application, the host device indicates, to the relay device, a time window in which relay forwarding is turned on/turned off, so that the relay device does not amplify and forward a received signal in the time window in which relay forwarding is turned off. This can avoid a case in which when the host device does not schedule a terminal device served by the relay device, the relay device amplifies and forwards a received interference signal, causing interference to receiving by the host device and the terminal device, and can reduce power consumption of the relay device.

In a possible implementation, before the relay device performs relay forwarding based on the first information, the relay device may obtain information about a time domain resource used for uplink forwarding and information about a time domain resource used for downlink forwarding in the first time domain resource set.

Currently, the host device may notify UE of the TDD configuration by using three types of signaling:
1. In an implementation, the host device may send a common TDD configuration to the UE by using broadcast information such as a system information block 1 (system information block 1, SIB1). The common TDD configuration includes configuration information of a type of each slot and/or each symbol in a TDD configuration periodicity.
2. The host device may alternatively send a dedicated TDD configuration to the UE by using unicast signaling such as RRC signaling. The dedicated TDD configuration is used to modify a symbol type of a flexible symbol in a TDD configuration periodicity.
3. The host device may alternatively send indication information to the UE by using DCI format 2_0 (DCI format 2_0). The indication information is used to modify a symbol type of a flexible symbol in a TDD configuration periodicity.

In an implementation, if the relay device has some or all functions of the UE, for example, a function of receiving signaling such as an SIB 1, an RRC configuration, and DCI format 2_0, the relay device may obtain the TDD configuration by using the foregoing three types of signaling, to determine, based on the TDD configuration, the time domain resource used for uplink forwarding and the time domain resource used for downlink forwarding in the first time domain resource set.

Optionally, the relay device may reinterpret the TDD configuration. For example, the relay device may understand an uplink slot/symbol in the first time domain resource set as a slot/symbol used for uplink forwarding, understand a downlink slot/symbol as a slot/symbol used for downlink forwarding, and understand a flexible slot/symbol as a slot/symbol not used for uplink forwarding and downlink forwarding.

In a possible implementation, after receiving the dedicated TDD configuration, the relay device may perform the foregoing reinterpretation on the TDD configuration. When the dedicated TDD configuration is not received, the relay device may determine a working mode of the host device on the first time domain resource set based on the common TDD configuration. That is, the host device performs uplink transmission in an uplink slot/symbol in the first time domain resource set, and performs downlink transmission in a downlink slot/symbol in the first time domain resource set.

Optionally, if the relay device receives the dedicated TDD configuration before reporting, to the host device, that a node type of the relay device is a relay node, the relay device may not perform the foregoing reinterpretation. It should be understood that only an example in which the node type is a relay node is used for description herein. In specific implementation, the node type reported by the relay device to the host device may be another type, for example, CPE or IAB. The host device may determine, based on the node type, that the relay device has a relay forwarding function.

Alternatively, the relay device may perform working mode interpretation in a sequence of broadcast signaling-unicast signaling-DCI. To be specific, the unicast signaling may modify a flexible slot/symbol type indicated by the broadcast signaling, and the DCI may modify a flexible slot/symbol type indicated by the unicast signaling.

In another implementation, the host device may send other signaling to the first relay node to indicate the time domain resource used for uplink forwarding and the time domain resource used for downlink forwarding in the first time domain resource set. In a possible implementation, an information element format of a current dedicated TDD configuration may be reused for other signaling. For example, the current dedicated TDD configuration may indicate positions and/or quantities of uplink symbols and downlink symbols in a slot. The other signaling may indicate positions and/or quantities of uplink forwarding symbols and downlink forwarding symbols in the slot. Optionally, a name of the other signaling may be different from that of signaling for configuring the dedicated TDD configuration.

In still another implementation, the host device may indicate at least one of the following information to the relay device: a start position of a time domain resource used for uplink transmission in a first periodicity, an end position of a time domain resource used for uplink transmission in the first periodicity, a start position of a time domain resource used for downlink transmission in the first periodicity, and an end position of a time domain resource used for downlink transmission in the first periodicity. The relay device may determine, based on the information indicated by the host device, the time domain resource used for uplink forwarding and the time domain resource used for downlink forwarding in the first time domain resource set. The first time domain resource set includes one or more time domain resources in the first periodicity.

It should be noted that a time domain resource used for uplink transmission is a time domain resource of an uplink transmission type. A terminal device may use the time domain resource to perform uplink transmission, or may not use the time domain resource to perform uplink transmission. A time domain resource used for downlink transmission is a time domain resource of a downlink transmission type. A terminal device may use the time domain resource to perform downlink transmission, or may not use the time domain resource to perform downlink transmission.

Optionally, the host device may explicitly indicate to the relay device. For example, the host device may send second information to the relay device. The second information indicates at least one of the following information: a start position of uplink transmission in the first periodicity, an end position of uplink transmission in the first periodicity, a start position of downlink transmission in the first periodicity, and an end position of downlink transmission in the first periodicity. The relay device may determine, based on the second information, the time domain resource used for uplink forwarding and the time domain resource used for downlink forwarding in the first time domain resource set. The first time domain resource set includes one or more time domain resources in the first periodicity.

For example, the second information may indicate at least one of the following information: a symbol index of a start symbol of the time domain resource used for uplink transmission in the first periodicity, a symbol index of an end symbol of the time domain resource used for uplink transmission in the first periodicity, a symbol index of a start symbol of the time domain resource used for downlink transmission in the first periodicity, and a symbol index of an end symbol of the time domain resource used for downlink transmission in the first periodicity.

The relay device may determine symbols used for uplink transmission in the first periodicity based on the symbol index of the start symbol of the time domain resource used for uplink transmission in the first periodicity and the symbol index of the end symbol of the time domain resource used for uplink transmission in the first periodicity.

Optionally, the relay device may determine a specific time domain position of a symbol corresponding to a symbol index based on a subcarrier spacing (subcarrier space, SCS). The relay device may determine a period of time corresponding to an uplink transmission resource in the first periodicity based on the SCS. For example, the SCS may be an SCS corresponding to the first time unit indicated by the first information. The SCS may be explicitly or implicitly configured by the host device, or the SCS may be a reference SCS in the common TDD configuration.

Certainly, the host device may also implicitly indicate at least one of the following information to the relay device: a start position of uplink transmission in the first periodicity, an end position of uplink transmission in the first periodicity, a start position of downlink transmission in the first periodicity, and an end position of downlink transmission in the first periodicity.

The first periodicity may be a TDD configuration periodicity configured by the host device by using broadcast signaling.

In example description, a start symbol of a first segment of downlink transmission in the first periodicity may be a first symbol of the first periodicity, and an end symbol of a last segment of uplink transmission is a last symbol of the first periodicity. Assuming that there is only one segment of downlink transmission and one segment of uplink transmission in the first periodicity, the second information may indicate an end symbol of downlink transmission in the first periodicity and a start symbol of uplink transmission in the first periodicity. A plurality of consecutive uplink symbols may be a segment of uplink transmission, and a plurality of consecutive downlink symbols may be a segment of downlink transmission.

It may be understood that if the second information indicates a start symbol of downlink transmission and an end symbol of uplink transmission, it may indicate that the first periodicity includes more than one segment of downlink transmission or uplink transmission.

If the first time domain resource set includes a plurality of first periodicities, for example, two first periodicities, the first time domain resource set includes a plurality of segments of downlink transmission and/or uplink transmission. Start positions of the plurality of segments of downlink transmission include at least start symbols of the plurality of first periodicities. Similarly, end positions of the plurality of segments of uplink signals include at least end symbols of the plurality of first periodicities. Assuming that the first time domain resource set includes two first periodicities, the second information may indicate two downlink amplification end symbol indexes, and the two downlink amplification end symbol indexes respectively indicate end positions of downlink transmission in the two first periodicities. The second information may further indicate two uplink amplification start symbol indexes, and the two uplink amplification start symbol indexes respectively indicate start positions of uplink transmission in the two first periodicities.

The foregoing describes a method for determining, by the relay device, the time domain resource used for uplink forwarding and the time domain resource used for downlink forwarding in the first time domain resource set. To accurately perform uplink amplification and downlink amplification, the relay device may further obtain an uplink amplification timing and a downlink amplification timing.

First, the downlink amplification timing and the uplink amplification timing are first described in this embodiment of this application.

Downlink amplification timing: The relay device may perform synchronization signal/physical layer broadcast channel block (synchronization signal/physical broadcast channel block, SSB, SS/PBCH block) detection in the same way as UE to determine a downlink reception timing, and use the downlink reception timing as the downlink amplification (forwarding) timing. For a specific method for determining the downlink reception timing by performing SS/PBCH block detection by the UE, refer to the description in the 3GPP protocol. Details are not described herein.

Optionally, the relay device may determine the downlink reception timing by measuring reference signals such as a channel state information reference signal (channel state information reference signal CSI-RS) and a tracking reference signal (tracking reference signal, TRS), and use the downlink reception timing as the downlink amplification (forwarding) timing.

In this embodiment, the downlink reception timing may include a downlink reception frame timing, a downlink reception slot timing, a downlink reception symbol timing, and the like. The downlink reception frame timing may be a start moment of a downlink reception frame of the relay device. The downlink reception slot timing may be a start moment of a downlink reception slot of the relay device. The downlink reception symbol timing may be a start moment of a downlink reception symbol of the relay device. Optionally, the relay device may use a first detected path of a downlink signal as a timing start position of a corresponding downlink frame, slot, or symbol.

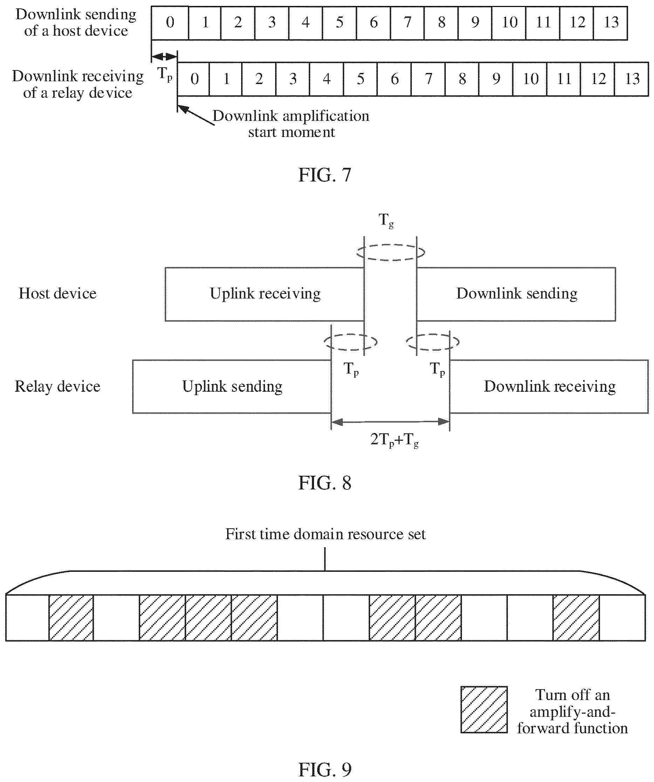

For example, as shown in FIG. 7, a downlink slot is used as an example. The host device sends a downlink signal in the downlink slot, and the relay device receives the downlink signal after a period of time. Tₚ represents a propagation delay from the host device to the relay device. Assuming that a start moment for sending a downlink frame i by the host device is Tᵢ, a start moment for receiving the downlink frame i by the relay device may be Tᵢ+Tₚ. It should be understood that a possible timing estimation error is ignored in this example. For the downlink frame i, a start moment of downlink amplification of the relay device may be Tᵢ+Tₚ.

In a TDD system, the host device needs a specific period of time to switch from an uplink receiving mode to a downlink sending mode. Therefore, a specific guard period is required between a time domain resource used for downlink transmission and a time domain resource used for uplink transmission, so that the host device can complete switching between the downlink sending mode and the uplink receiving mode. The guard period between the time domain resource used for downlink transmission and the time domain resource used for uplink transmission may be denoted as T_{g}. An uplink sending timing of a control link between the relay device and the host device is first considered. To align an uplink signal sent by the relay device with an uplink receive window of the host device, the host device needs to adjust and control an uplink sending timing of the relay device by using a timing advance (timing advance, TA). Specifically, to implement alignment on a host device side, the uplink sending timing of the relay device may be 2Tₚ+T_{g} earlier than the downlink reception timing, where Tₚ is a propagation delay from the host device to the relay device, and T_{g} is a guard period between a time domain resource used for downlink transmission and a time domain resource used for uplink transmission, for example, as shown in FIG. 8.

The following describes three methods for determining an uplink forwarding timing advance provided in this embodiment of this application. In this application, the uplink forwarding advance indicates an advance of a frame timing for performing uplink forwarding by the relay device relative to a frame timing for performing downlink forwarding by the relay device.

Method 1: The relay device may receive an uplink forwarding timing advance sent by the host device.

To align an uplink signal amplified or forwarded by the relay device with an uplink receive window of the host device, an advance of uplink amplification relative to downlink amplification (or downlink reception) may also be 2Tₚ+T_{g}. The host device may configure a TA for the relay device, and the relay device determines the uplink forwarding timing advance based on the configured TA. Specifically, the relay device may reuse a timing advance procedure of common UE to determine an uplink timing advance for communication between the relay device and the host device. In other words, when the relay device has an uplink signal sending capability, the host device may also adjust the TA to align the uplink signal of the relay device with the uplink receive window of the host device. The TA may be a timing advance of an uplink between the relay device and the host device, and the relay device may use the timing advance as the forwarding timing advance of uplink forwarding. T_{TA} may meet the following formula or may be determined according to the following formula: T_{TA}=(N_{TA}+N_{TA, offset})T_{c}, where N_{TA} is a TA configured or indicated by the host device, N_{TA,offset} is an initial timing advance or an initial timing advance offset, and N_{TA,offset} may be preconfigured. T_{c} is a basic time unit, for example, a basic time unit in NR. In other words, the host device adjusts the N_{TA} of the relay device, so that T_{TA}=2Tₚ+T_{g}, or the two values are as close as possible, to improve accuracy of a timing advance of the relay device.

Alternatively, a standard may also define an uplink forwarding timing advance for the relay device. A manner of setting and indicating the uplink forwarding timing advance may be consistent with a manner of setting and indicating the uplink timing advance. The host device may configure the uplink forwarding timing advance for the relay device.

Alternatively, the relay device may receive an uplink timing advance that is of the backhaul link or the control link and that is sent by the host device, and use the uplink timing advance of the backhaul link or the control link as the uplink forwarding timing advance.

Method 2: The relay device may determine an uplink forwarding timing advance based on an initial advance.

Assuming that a transmission delay between the host device and the relay device is 0, an advance of uplink forwarding amplification relative to downlink forwarding amplification (or downlink reception) may be T_{g}. In a protocol, the relay device may not be able to directly obtain T_{g}. Therefore, an advance of uplink amplification of the relay device relative to downlink amplification (or downlink reception) may be N_{(TA, offset})T_{c}. In other words, it is assumed that N_{TA}=0, or T_{g}=N_{(TA,offset})T_{c}.

Method 3: The relay device may determine an uplink forwarding timing advance based on an interval of switching from downlink forwarding to uplink forwarding and a guard period between a time domain resource used for downlink transmission and a time domain resource used for uplink transmission.

It is assumed that an interval of switching from downlink amplification to uplink amplification of the relay device is Tᵣₛ. In a possible implementation, the relay device switches to uplink amplification in a shortest period after downlink amplification ends, that is, starts uplink amplification at the moment Tᵣₛ after downlink amplification ends. Assuming that a quantity of guard symbols between the time domain resource used for downlink transmission and the time domain resource used for uplink transmission is N_{g}, and a symbol length is T_{d}, an uplink amplification advance may be N_{g}T_{d}-Tᵣₛ. Optionally, a protocol may provide a value of Tᵣₛ. For example, the protocol may define Tᵣₛ=N_{(TA, offset})T_{c}.

In an implementation, the relay device may determine a start moment of uplink forwarding based on the uplink forwarding timing advance and a start position of the time domain resource used for uplink transmission, and determine duration of uplink forwarding based on the start position and an end position of the time domain resource used for uplink transmission. The relay device may determine an uplink forwarding time window based on the start moment and the duration of uplink forwarding.

For example, it is assumed that the uplink forwarding timing advance is T, a start position of a time domain resource used for uplink transmission is a symbol 3, and an end position of a time domain resource used for uplink transmission is a symbol 7. A start moment of the symbol 3 is t1, and a symbol length is T_{d}. The host device performs uplink receiving starting from the start moment t1 of the symbol 3, and lasts for a length of 5 symbols. In other words, an uplink receive time window of the host device is t1 to t1+5T_{d}. However, when performing uplink forwarding, the relay device advances duration T by using the moment t1 as a reference. In other words, the relay device starts to perform uplink forwarding at a moment t1-T, and the uplink forwarding lasts for a length of 5 symbols. In other words, an uplink receive time window of the relay device is t1-T to t1-T+5T_{d}.

According to the uplink forwarding timing advances obtained in the first method to the third method, uplink amplification duration (that is, a length of the uplink forwarding time window) determined by the relay device may be equal to (or approximately equal to) duration of a to-be-amplified uplink signal or a to-be-amplified time domain resource unit.

In another implementation, the relay device may determine the start moment of uplink forwarding based on the uplink forwarding timing advance determined in Method 3 and the start position of the time domain resource used for uplink transmission, and determine an end moment of uplink forwarding based on the uplink forwarding timing advance determined in Method 2 and the end position of the time domain resource used for uplink transmission. The relay device may determine an uplink forwarding time window based on the start moment and the end moment of uplink forwarding.

For example, it is assumed that the uplink forwarding timing advance determined in Method 3 is T1, the uplink forwarding timing advance determined in Method 2 is T2, the start position of the time domain resource used for uplink transmission is a symbol 3, and the end position of the time domain resource used for uplink transmission is a symbol 7. A start moment of the symbol 3 is t1, and an end moment of the symbol 7 is t2. The host device starts to perform uplink receiving from the start moment t1 of the symbol 3, and stops performing uplink receiving at the end moment t2 of the symbol 7. In other words, the uplink receive time window of the host device is t1 to t2. When performing uplink forwarding, the relay device advances duration T1 by using the moment t1 as a reference. In other words, the relay device starts to perform uplink forwarding at a moment t1-T. When stopping uplink forwarding, the relay device advances duration T2 by using the moment t2 as a reference. In other words, the uplink forwarding time window of the relay device is t1-T1 to t2-T2.

In the foregoing implementation, the start moment and the end moment of the uplink forwarding time window are determined by using different timing advances. Duration of uplink amplification (that is, the length of the uplink forwarding time window) determined by the relay device may be greater than duration of the to-be-amplified signal or the to-be-amplified time domain resource unit.

Optionally, the relay device may detect a start moment of downlink forwarding, and may determine duration of downlink forwarding based on a start position and an end position of the time domain resource used for downlink transmission. The relay device may determine a downlink forwarding time window based on the start moment and the duration of downlink forwarding.

In an implementation, if a time interval between the uplink forwarding time window and the downlink forwarding time window is not greater than Tᵣₛ, the relay device may not amplify signals carried in first N uplink symbols after a downlink-to-uplink switch point, where N is an integer greater than or equal to 1. For example, assuming that N is equal to 1, the relay device may not amplify a signal carried in a first uplink symbol after the downlink-to-uplink switch point. Alternatively, the relay device performs signal amplification from a second or subsequent uplink symbol after the downlink-to-uplink switch point. Alternatively, the relay device may not amplify signals carried in last M downlink symbols before the downlink-to-uplink switch point, where M is an integer greater than or equal to 1. For example, assuming that M is equal to 1, the relay device may not amplify a signal carried in a last downlink symbol before the downlink-to-uplink switch point. For example, M and N may be configured by the host device, or may be specified in a protocol, or may be determined by the relay device in another manner. This is not specifically limited herein.

In this embodiment of this application, the relay device obtains a symbol on which uplink amplification is performed and a symbol on which downlink amplification is performed, and may determine the uplink forwarding time window and the downlink forwarding time window by using the uplink forwarding timing advance. Therefore, a signal loss or interference noise amplification caused by mismatch between the uplink forwarding time window of the relay device and an uplink signal receive window of the host device and mismatch between the downlink forwarding time window of the relay device and a downlink signal receive window of the terminal device can be reduced.

The following describes an example of a manner in which the host device indicates whether the relay device turns on the amplify-and-forward function on the first time domain resource unit in the first time domain resource set.

Optionally, the first information may indicate a time domain resource unit on which the relay device turns off the amplify-and-forward function in the first time domain resource set, so that the relay device may indirectly determine a time domain resource unit on which the amplify-and-forward function is turned on in the first time domain resource set. For example, the first information may be an off pattern of the first time domain resource set, and the off pattern indicates a position of the time domain resource unit on which the amplify-and-forward function is turned off in the first time domain resource set, as shown in FIG. 9.

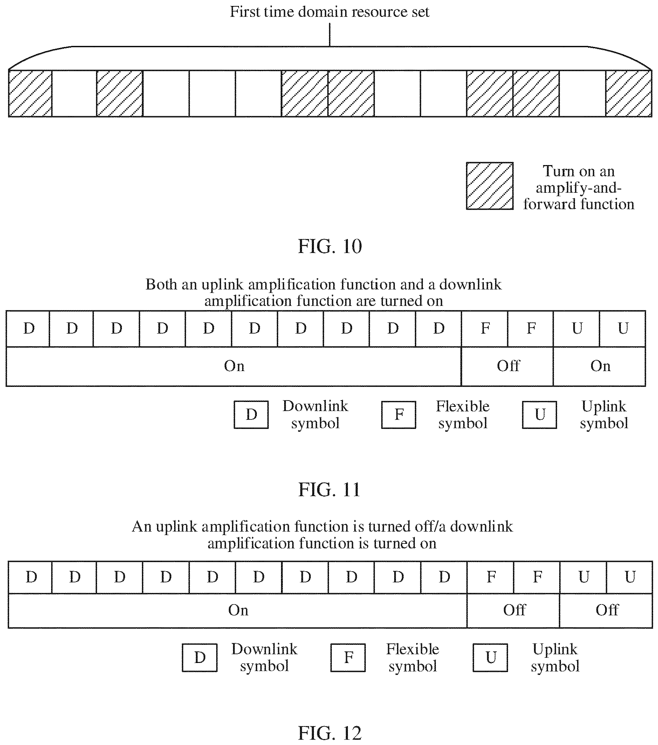

Alternatively, the first information may indicate a time domain resource unit on which the relay device turns on the amplify-and-forward function in the first time domain resource set, so that the relay device may indirectly determine a time domain resource unit on which the amplify-and-forward function is turned off in the first time domain resource set. For example, the first information may be an on pattern of the first time domain resource set, and the on pattern indicates a position of the time domain resource unit on which the amplify-and-forward function is turned on in the first time domain resource set, as shown in FIG. 10.

Alternatively, the first information may indicate whether the relay device turns on/turns off the amplify-and-forward function on each time domain resource unit in the first time domain resource set. For example, the first information may be indicated in a bitmap (bit map). It is assumed that the first time domain resource set includes five time domain resource units, 1 may indicate that the amplify-and-forward function is turned on, and 0 may indicate that the amplify-and-forward function is turned off. The first information may be a 01001, and indicates the relay device to turn on the amplify-and-forward function on a second time domain resource unit and a fifth time domain resource unit in the first time domain resource set, and turn off the amplify-and-forward function on a first time domain resource unit, a third time domain resource unit, and a fourth time domain resource unit.

In an implementation, when the first information indicates the amplify-and-forward function of the relay device, a forwarding direction of the relay device may not be distinguished. For example, the first information may indicate that the amplify-and-forward function on the first time domain resource unit is to be in an off state. In this case, both the uplink amplify-and-forward function and the downlink amplify-and-forward function of the relay device on the first time domain resource unit are turned off. Alternatively, the first information may indicate that the amplify-and-forward function on the first time domain resource unit is to be in an on state. In this implementation, if the first time domain resource unit is configured for uplink transmission, the relay device turns on the uplink amplify-and-forward function on the first time domain resource unit. If the first time domain resource unit is configured for downlink transmission, the relay device turns on the downlink amplify-and-forward function on the first time domain resource unit. If the first time domain resource unit includes at least one first time domain resource subunit and at least one second time domain resource subunit, the first time domain resource subunit is configured for uplink transmission, and the second time domain resource subunit is configured for downlink transmission, the relay device turns on the uplink amplify-and-forward function on the at least one first time domain resource subunit, and turns on the downlink amplify-and-forward function on the at least one second time domain resource subunit.

In another implementation, when indicating the amplify-and-forward function of the relay device, the first information indicates a forwarding direction of the relay device. In the foregoing implementation, scheduling flexibility of the host device can be improved.

For example, the first information indicates a status of the uplink amplify-and-forward function of the relay device on the first time domain resource unit. In this implementation, if the first time domain resource unit is configured for downlink transmission, the relay device may ignore the first information. In this embodiment, because the first time domain resource unit is configured for downlink transmission, "ignoring the first information" may be understood as: The relay device does not perform, on the first time domain resource, the uplink amplify-and-forward function indicated by the first information. Optionally, the relay device may turn on the downlink amplify-and-forward function on the first time domain resource unit.

Alternatively, the first information indicates a status of the downlink amplify-and-forward function of the relay device on the first time domain resource unit. In this implementation, if the first time domain resource unit is configured for uplink transmission, the relay device may ignore the first information. In this embodiment, because the first time domain resource unit is configured for uplink transmission, "ignoring the first information" may be understood as: The relay device does not perform, on the first time domain resource, the downlink amplify-and-forward function indicated by the first information. Optionally, the relay device may turn on the uplink amplify-and-forward function on the first time domain resource unit.

Alternatively, the first information indicates the status of the uplink amplify-and-forward function and the status of the downlink amplify-and-forward function of the relay device on the first time domain resource unit. The uplink amplify-and-forward function includes at least two states: on and off, and the downlink amplify-and-forward function includes at least two states: on and off. In this manner, if the first time domain resource unit is configured for downlink transmission, the relay device may ignore an indication of the uplink amplification function by the first information, and perform downlink amplification and forwarding based on a status that is of the downlink amplify-and-forward function and that is indicated by the first information. That is, if the first information indicates to turn off the downlink amplify-and-forward function on the first time domain resource unit, the relay device turns off the downlink amplify-and-forward function on the first time domain resource unit; or if the first information indicates to turn on the downlink amplify-and-forward function on the first time domain resource unit, the relay device turns on the downlink amplify-and-forward function on the first time domain resource unit. If the first time domain resource unit is configured for uplink transmission, the relay device may ignore an indication of the downlink amplification function by the first information, and perform uplink amplification and forwarding based on a status that is of the uplink amplify-and-forward function and that is indicated by the first information. That is, if the first information indicates to turn off the uplink amplify-and-forward function on the first time domain resource unit, the relay device turns off the uplink amplify-and-forward function on the first time domain resource unit; or if the first information indicates to turn on the uplink amplify-and-forward function on the first time domain resource unit, the relay device turns on the uplink amplify-and-forward function on the first time domain resource unit.

For example, the first information is used to indicate the status of the uplink amplify-and-forward function and the status of the downlink amplify-and-forward function of the relay device on the first time domain resource unit. In a possible implementation, the status of the uplink amplify-and-forward function and the status of the downlink amplify-and-forward function may be separately indicated. For example, the first information may include first sub information and second sub information. The first sub information indicates the status of the uplink amplify-and-forward function of the relay device on the first time domain resource unit, and the second sub information indicates the status of the downlink amplify-and-forward function of the relay device on the first time domain resource unit.

When the first time domain resource unit includes at least one first time domain resource subunit (referred to as an uplink subunit below) configured for uplink transmission and at least one second time domain resource subunit (referred to as a downlink subunit below) configured for downlink transmission, the relay device determines a status of a forwarding function of the uplink subunit based on the first sub information, and determines a status of a forwarding function of the downlink subunit based on the second sub information. When the first time domain resource unit does not include a downlink subunit, that is, when the first time domain resource unit is configured for uplink transmission, the relay device may ignore the second sub information, or the relay device may not expect to receive the second sub information, and perform uplink amplification and forwarding based on the first sub information. That is, if the first sub information indicates to turn off the uplink amplify-and-forward function on the first time domain resource unit, the relay device turns off the uplink amplify-and-forward function on the first time domain resource unit; or if the first sub information indicates to turn on the uplink amplify-and-forward function on the first time domain resource unit, the relay device turns on the uplink amplify-and-forward function on the first time domain resource unit. When the first time domain resource unit does not include an uplink subunit, that is, when the first time domain resource unit is configured for downlink transmission, the relay device may ignore the first sub information, or the relay device may not expect to receive the first sub information, and perform downlink amplification and forwarding based on the status that is of the downlink amplify-and-forward function and that is indicated by the second sub information. That is, if the second sub information indicates to turn off the downlink amplify-and-forward function on the first time domain resource unit, the relay device turns off the downlink amplify-and-forward function on the first time domain resource unit; or if the second sub information indicates to turn on the downlink amplify-and-forward function on the first time domain resource unit, the relay device turns on the downlink amplify-and-forward function on the first time domain resource unit. In an implementation, the first time domain resource unit may be a slot, and a time domain resource subunit may be a symbol.

In another possible implementation, the status of the uplink amplify-and-forward function and the status of the downlink amplify-and-forward function may also be jointly indicated. For example, the first information includes one of a first indication state, a second indication state, a third indication state, and a fourth indication state. The first indication state indicates that both the uplink amplify-and-forward function and the downlink amplify-and-forward function of the relay device on the first time domain resource unit are in an on state. The second indication state indicates that the uplink amplify-and-forward function of the relay device on the first time domain resource unit is in an off state, and the downlink amplify-and-forward function is in the on state. The third indication state indicates that the uplink amplify-and-forward function of the relay device on the first time domain resource unit is in the on state, and the downlink amplify-and-forward function is in the off state. The fourth indication state indicates that both the uplink amplify-and-forward function and the downlink amplify-and-forward function of the relay device on the first time domain resource unit are in the off state, as shown in FIG. 1.

**Table 1**

| First information | Indication content |
|---|---|
| First indication state | Both the uplink amplification function and the downlink amplification function are turned on |
| Second indication state | The uplink amplification function is turned off/the downlink amplification function is turned on |
| Third indication state | The uplink amplification function is turned on/the downlink amplification function is turned off |
| Fourth indication state | Both the uplink amplification function and the downlink amplification function are turned off |

Optionally, if the first time domain resource unit includes a time domain resource subunit of a flexible type such as a flexible slot/symbol, the relay device may turn off the amplify-and-forward function on the time domain resource subunit of the flexible type.

Correspondingly, for example, the first information indicates the first indication state. If the first time domain resource unit is configured for uplink transmission, that is, the first time domain resource unit does not include a downlink subunit, the relay device turns on the uplink amplify-and-forward function on the first time domain resource unit. If the first time domain resource unit is configured for downlink transmission, that is, the first time domain resource unit does not include an uplink subunit, the relay device turns on the downlink amplify-and-forward function on the first time domain resource unit. If the first time domain resource unit includes at least one uplink subunit and at least one downlink subunit, the relay device turns on the uplink amplify-and-forward function on the at least one uplink subunit, and turns on the downlink amplify-and-forward function on the at least one downlink subunit. It is assumed that the first time domain resource unit is a slot, and the time domain resource subunit is a symbol. If the slot is configured for uplink transmission, that is, the slot is an uplink slot, the relay device turns on the uplink amplify-and-forward function in the slot. If the slot is configured for downlink transmission, that is, the slot is a downlink slot, the relay device turns on the downlink amplify-and-forward function in the slot. If the slot includes at least one uplink symbol and at least one downlink symbol, the relay device turns on the uplink amplify-and-forward function on the at least one uplink symbol, and turns on the downlink amplify-and-forward function on the at least one downlink symbol. Optionally, if the slot further includes at least one flexible symbol, the relay device may turn off the amplify-and-forward function on the at least one flexible symbol, as shown in FIG. 11.

For example, the first information indicates the second indication state. If the first time domain resource unit is configured for uplink transmission, that is, the first time domain resource unit does not include a downlink subunit, the relay device turns off the uplink amplify-and-forward function on the first time domain resource unit. If the first time domain resource unit is configured for downlink transmission, that is, the first time domain resource unit does not include an uplink subunit, the relay device turns on the downlink amplify-and-forward function on the first time domain resource unit. If the first time domain resource unit includes at least one uplink subunit and at least one downlink subunit, the relay device turns off the uplink amplify-and-forward function on the at least one uplink subunit, and turns on the downlink amplify-and-forward function on the at least one downlink subunit. It is assumed that the first time domain resource unit is a slot, and the time domain resource subunit is a symbol. If the slot is configured for uplink transmission, that is, the slot is an uplink slot, the relay device turns off the uplink amplify-and-forward function in the slot. If the slot is configured for downlink transmission, that is, the slot is a downlink slot, the relay device turns on the downlink amplify-and-forward function in the slot. If the slot includes at least one uplink symbol and at least one downlink symbol, the relay device turns off the uplink amplify-and-forward function on the at least one uplink symbol, and turns on the downlink amplify-and-forward function on the at least one downlink symbol. Optionally, if the slot further includes at least one flexible symbol, the relay device may turn off the amplify-and-forward function on the at least one flexible symbol, as shown in FIG. 12.

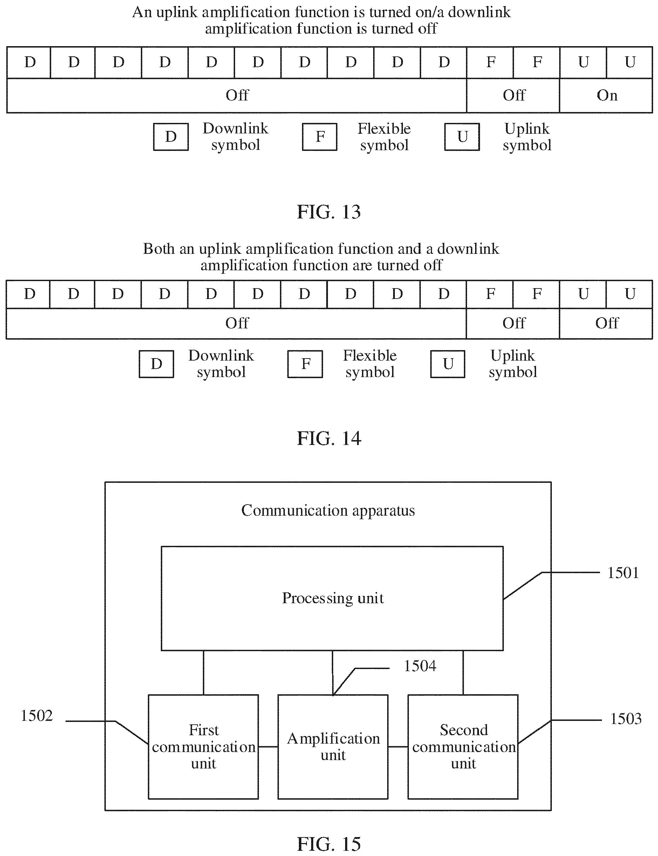

For example, the first information indicates the third indication state. If the first time domain resource unit is configured for uplink transmission, that is, the first time domain resource unit does not include a downlink subunit, the relay device turns on the uplink amplify-and-forward function on the first time domain resource unit. If the first time domain resource unit is configured for downlink transmission, that is, the first time domain resource unit does not include an uplink subunit, the relay device turns off the downlink amplify-and-forward function on the first time domain resource unit. If the first time domain resource unit includes at least one uplink subunit and at least one downlink subunit, the relay device turns on the uplink amplify-and-forward function on the at least one uplink subunit, and turns off the downlink amplify-and-forward function on the at least one downlink subunit. It is assumed that the first time domain resource unit is a slot, and the time domain resource subunit is a symbol. If the slot is configured for uplink transmission, that is, the slot is an uplink slot, the relay device turns on the uplink amplify-and-forward function in the slot. If the slot is configured for downlink transmission, that is, the slot is a downlink slot, the relay device turns off the downlink amplify-and-forward function in the slot. If the slot includes at least one uplink symbol and at least one downlink symbol, the relay device turns on the uplink amplify-and-forward function on the at least one uplink symbol, and turns off the downlink amplify-and-forward function on the at least one downlink symbol. Optionally, if the slot further includes at least one flexible symbol, the relay device may turn off the amplify-and-forward function on the at least one flexible symbol, as shown in FIG. 13.

For example, the first information indicates the fourth indication state. If the first time domain resource unit is configured for uplink transmission, that is, the first time domain resource unit does not include a downlink subunit, the relay device turns off the uplink amplify-and-forward function on the first time domain resource unit. If the first time domain resource unit is configured for downlink transmission, that is, the first time domain resource unit does not include an uplink subunit, the relay device turns off the downlink amplify-and-forward function on the first time domain resource unit. If the first time domain resource unit includes at least one uplink subunit and at least one downlink subunit, the relay device turns off the uplink amplify-and-forward function on the at least one uplink subunit, and turns off the downlink amplify-and-forward function on the at least one downlink subunit. It is assumed that the first time domain resource unit is a slot, and the time domain resource subunit is a symbol. If the slot is configured for uplink transmission, that is, the slot is an uplink slot, the relay device turns off the uplink amplify-and-forward function in the slot. If the slot is configured for downlink transmission, that is, the slot is a downlink slot, the relay device turns off the downlink amplify-and-forward function in the slot. If the slot includes at least one uplink symbol and at least one downlink symbol, the relay device turns off the uplink amplify-and-forward function on the at least one uplink symbol, and turns off the downlink amplify-and-forward function on the at least one downlink symbol. Optionally, if the slot further includes at least one flexible symbol, the relay device may turn off the amplify-and-forward function on the at least one flexible symbol, as shown in FIG. 14.

In some embodiments, the host node may use different indication methods for different types of slots. For example, for an uplink slot or a downlink slot, a forwarding direction of the relay device may not be distinguished when whether the relay device turns on the amplify-and-forward function in the slot is indicated. For a slot that includes both an uplink symbol and a downlink symbol, for example, a downlink-to-uplink switch slot in a TDD periodicity, when whether the relay device turns on the amplify-and-forward function in the slot is indicated, indication may be performed for a forwarding direction of the relay device.

When the first information is carried in DCI, the relay device may miss detecting a PDCCH, and therefore cannot determine an amplify-and-forward state of the first time domain resource unit based on the first information. Optionally, when the relay device does not detect the indication DCI, the relay device may keep forwarding enabled on the uplink subunit and the downlink subunit of the first time domain resource unit.

In a possible implementation, when the first time domain resource unit includes a time domain resource of a specific signal or channel, the relay device always turns on the amplify-and-forward function on the time domain resource of the specific channel or signal. For example, the time domain resource of the specific signal or channel may be some resources in the first time domain resource unit, or the first time domain resource unit is a part of the time domain resource of the specific signal or channel. In other words, the first time domain resource unit may include some resources of the specific signal. For example, when the first time domain resource unit is one slot, and the specific signal is an SSB, the time domain resource of the specific signal may be a plurality of symbols that include an SSB in the slot.

In a possible implementation, on the time domain resource of the specific signal, the relay device may ignore an amplify-and-forward indication of the first information, and always keep the amplify-and-forward function on. Specifically, when the first time domain resource unit includes the time domain resource of the specific signal or channel, even if the first information indicates to turn off the amplify-and-forward function of the relay device on the time domain resource, the relay device turns on the amplify-and-forward function in a transmission direction corresponding to the specific signal. For example, the first time domain resource unit includes a plurality of symbols of the SSB. Even if the first information indicates to turn off the amplify-and-forward function of the relay device on the plurality of symbols, the relay device turns on the downlink amplify-and-forward function on the plurality of symbols.

For example, the specific signal may include but is not limited to: the SSB, a system information block 1 (system information block 1, SIB1)-physical downlink control channel (physical downlink control channel, PDCCH), a SIB 1-physical downlink shared channel (physical downlink shared channel, PDSCH), a channel state information reference signal (channel state information reference signal, CSI-RS), a channel state information-interference measurement resource (channel state information interference measurement, CSI-IM), a tracking reference signal (tracking reference signal, TRS), a physical random access channel (physical random access channel, PRACH), and a sounding reference signal (sounding reference signal, SRS). Herein, the SIB1-PDSCH may be a PDSCH that carries SIB1 information, and the SIB1-PDCCH may be a PDCCH that schedules the SIB1-PDSCH.

To ensure downlink basic coverage, the host device continuously sends some basic signals and/or channels, which are referred to as basic coverage signals below, for example, the SSB, the SIB1-PDCCH, the SIB1-PDSCH, the CSI-RS, and the TRS. In the foregoing manner, the relay device can implement basic coverage.

Optionally, the relay device may obtain, through synchronization signal detection, broadcast/unicast signaling reading, or the like, resources occupied by some cell-level signals, for example, the SSB or the SIB1-PDCCH/PDSCH.

The following uses the SSB as an example for description. In FR2, the protocol defines candidate positions of 64 SSBs. The relay device detects an SSB and confirms an index of the SSB in a cell search process to complete time and frequency synchronization. In a subsequent process, the relay device may obtain an index number of an SSB actually sent by the host device.

In a possible implementation, the relay device may amplify all the SSBs, that is, turn on downlink amplification on resources occupied by all the SSBs. All the SSBs herein may be all candidate SSBs, or may be actually sent SSBs notified by the host device in signaling.

In another possible implementation, the relay device may alternatively amplify some SSBs. For example, the relay device amplifies an SSB on which the relay device performs initial access. Alternatively, the host device configures one or more SSB indexes for the relay device, and the relay device performs downlink amplification and forwarding on the configured SSBs. For example, the SSB index configured by the host device may be determined with reference to RSRP reported by the relay device.

It may be understood that, for another specific signal sent by the host device, the relay device may also use a method similar to that for forwarding the SSB.

Optionally, for the SIB 1-PDCCH/PDSCH, the relay device may obtain a sending resource of the SIB 1-PDCCH by reading information about a physical broadcast channel (physical broadcast channel, PBCH). If the relay device amplifies only some SSBs, the relay device may also amplify only SIB1-PDCCHs/PDSCHs corresponding to these SSBs.

For the PRACH, if the relay device amplifies only some SSBs, the relay device may also perform uplink amplification on only PRACHs associated with these SSBs.

In addition, the PRACH may be a RACH occasion (occasions) resource used by the relay device for access, or may be a RACH occasion resource indicated by the host device.

In this embodiment of this application, the relay device may ignore the indication of the first information on the resource occupied by the specific signal, and always amplify and forward the specific signal. In this way, it can be ensured that the specific signal is forwarded in time, and the relay device can ensure a function such as basic coverage.

In a possible implementation, the relay device may enter a basic coverage mode. For example, the host device may indicate the relay device to enter the basic coverage mode. In the basic coverage mode, the relay device may turn on uplink and downlink forwarding only on a specific time domain resource (for example, a time domain resource of a specific signal/channel). For example, the relay device forwards all or some basic coverage signals.

Optionally, the relay device may be further configured with an off pattern or a forwarding on pattern in the basic coverage mode. For example, other information indicates a time domain resource unit on which the relay device turns off/turns on the amplify-and-forward function in the basic coverage mode. After entering the basic coverage mode, the relay device may perform forwarding based on the other information.

Based on a same technical concept as the method embodiment, an embodiment of this application provides a communication apparatus. The communication apparatus may be specifically configured to implement the method performed by the relay device in the foregoing embodiment. The apparatus may be the relay device, or may be a chip, a chip set, or a part that is configured to perform a related method function in a chip in the relay device. A structure of the communication apparatus may be shown in FIG. 15, including a processing unit 1501, a first communication unit 1502, and a second communication unit 1503, and may further include an amplification unit 1504. The amplification unit 1504 is configured to perform processing such as amplification on an uplink signal and a downlink signal. For example, the amplification unit 1504 may be an amplifier or an amplification circuit. The first communication unit 1502 and the second communication unit 1503 may communicate with the outside. The processing unit 1501 is configured to perform processing, for example, control whether the amplification unit 1504 turns on an amplify-and-forward function on a first time domain resource unit in a first time domain resource set. The first communication unit 1502 and the second communication unit 1503 may also be referred to as communication interfaces or transceiver units. The first communication unit 1502 may be configured to perform a communication action between the relay device and an upper-level node in the foregoing method embodiment, for example, receiving first information and sending an uplink signal to the upper-level node. The second communication unit 1503 may be configured to perform a communication action between the relay device and a lower-level node in the foregoing method embodiment, for example, sending a downlink signal to the lower-level node.

For example, the first communication unit 1502 may include a sending module and/or a receiving module, respectively configured to perform the steps of sending and receiving between the relay device and the upper-level node in the foregoing method embodiment. The second communication unit 1503 may include a sending module and/or a receiving module, respectively configured to perform the steps of sending and receiving between the relay device and the lower-level node in the foregoing method embodiment.

The processing unit 1501 is configured to perform a processing-related operation of the relay device in the foregoing method embodiment.

For example, the amplification unit 1504 may include an uplink amplification module and/or a downlink amplification module, respectively configured to perform steps of uplink amplification and downlink amplification of the relay device in the foregoing method embodiment. Optionally, the uplink amplification module and the first communication unit 1502 may be integrated into one unit, and the downlink amplification module and the second communication unit 1503 may be integrated into one unit.

For example, the first communication unit 1502 is configured to receive first information sent by a host device. The first information is used to determine whether the relay device turns on the amplify-and-forward function on the first time domain resource unit in the first time domain resource set, the first time domain resource set includes one or more time domain resource units, and the first time domain resource unit is any time domain resource unit in the first time domain resource set. The processing unit 1501 is configured to control, based on the first information, the amplification unit 1504 to turn on or turn off the amplify-and-forward function on the first time domain resource unit in the first time domain resource set.

For example, the first information indicates that the amplify-and-forward function on the first time domain resource unit is to be in an off state, or the first information indicates that the amplify-and-forward function on the first time domain resource unit is to be in an on state.

Optionally, the processing unit 1501 may be specifically configured to:
when the first information indicates that the amplify-and-forward function on the first time domain resource unit is to be in the off state, control the amplification unit 1504 to turn off the amplify-and-forward function on the first time domain resource unit; or
when the first information indicates that the amplify-and-forward function on the first time domain resource unit is to be in the on state, and if the first time domain resource unit is configured for uplink transmission, control the amplification unit 1504 to turn on an uplink amplify-and-forward function on the first time domain resource unit; or
when the first information indicates that the amplify-and-forward function on the first time domain resource unit is to be in the on state, and if the first time domain resource unit is configured for downlink transmission, control the amplification unit 1504 to turn on a downlink amplify-and-forward function on the first time domain resource unit; or
when the first information indicates that the amplify-and-forward function on the first time domain resource unit is to be in the on state, and if the first time domain resource unit includes at least one first time domain resource subunit and at least one second time domain resource subunit, the first time domain resource subunit is configured for uplink transmission, and the second time domain resource subunit is configured for downlink transmission, control the amplification unit 1504 to turn on an uplink amplify-and-forward function on the at least one first time domain resource subunit, and turn on a downlink amplify-and-forward function on the at least one second time domain resource subunit.

For example, the first information indicates at least one of the following information: a status of an uplink amplify-and-forward function on the first time domain resource unit, and a status of a downlink amplify-and-forward function on the first time domain resource unit.

For example, the first information includes at least one of the following information: first sub information and second sub information, where the first sub information indicates the status of the uplink amplify-and-forward function on the first time domain resource unit, and the second sub information indicates the status of the downlink amplify-and-forward function on the first time domain resource unit.

For example, the first information includes a first indication state, a second indication state, a third indication state, and a fourth indication state.

The first indication state indicates that both the uplink amplify-and-forward function and the downlink amplify-and-forward function on the first time domain resource unit are in an on state. The second indication state indicates that the uplink amplify-and-forward function on the first time domain resource unit is in an off state, and the downlink amplify-and-forward function is in the on state. The third indication state indicates that the uplink amplify-and-forward function on the first time domain resource unit is in the on state, and the downlink amplify-and-forward function is in the off state. The fourth indication state indicates that both the uplink amplify-and-forward function and the downlink amplify-and-forward function on the first time domain resource unit are in the off state.

For example, the first time domain resource unit includes at least one first time domain resource subunit and at least one second time domain resource subunit, the first time domain resource subunit is configured for uplink transmission, and the second time domain resource subunit is configured for downlink transmission.

The processing unit 1501 may be specifically configured to: if the first information indicates that the uplink amplify-and-forward function on the first time domain resource unit is to be in the off state, control the amplification unit 1504 to turn off the uplink amplify-and-forward function on the at least one first time domain resource subunit; or if the first information indicates that the uplink amplify-and-forward function on the first time domain resource unit is to be in the on state, control the amplification unit 1504 to turn on the uplink amplify-and-forward function on the at least one first time domain resource subunit.

The processing unit 1501 may be further specifically configured to: if the first information indicates that the downlink amplify-and-forward function on the first time domain resource unit is to be in the off state, control the amplification unit 1504 to turn off the downlink amplify-and-forward function on the at least one second time domain resource subunit; or if the first information indicates that the downlink amplify-and-forward function on the first time domain resource unit is to be in the on state, control the amplification unit 1504 to amplify a downlink signal from the host device and forward the amplified downlink signal to a terminal device on the at least one second time domain resource subunit.

Optionally, the processing unit 1501 may be specifically configured to: when the first information indicates that the amplify-and-forward function on the first time domain resource unit is to be in the off state, control the amplification unit 1504 to turn on the amplify-and-forward function on a time domain resource of a specific signal, where the first time domain resource unit includes the time domain resource of the specific signal.

For example, the specific signal includes at least one of the following signals: an SSB, a SIB1-PDCCH, a SIB1-PDSCH, a CSI-RS, a TRS, a PRACH, and an SRS.

Optionally, the transceiver unit 1502 may be further configured to: before the processing unit 1501 controls, based on the first information, the amplification unit 1504 to turn on or turn off the amplify-and-forward function on the first time domain resource unit in the first time domain resource set, receive second information, where the second information indicates at least one of the following information: a start position of uplink transmission in a first periodicity, an end position of uplink transmission in the first periodicity, a start position of downlink transmission in the first periodicity, and an end position of downlink transmission in the first periodicity.

The processing unit 1501 may be further configured to determine, based on the second information, a time domain resource used for uplink forwarding and a time domain resource used for downlink forwarding in the first time domain resource set, where the first time domain resource set includes one or more time domain resources in the first periodicity.

Optionally, the transceiver unit 1502 may be further configured to: before the processing unit 1501 controls, based on the first information, the amplification unit 1504 to turn on or turn off the amplify-and-forward function on the first time domain resource unit in the first time domain resource set, receive an uplink forwarding timing advance sent by the host device.

Alternatively, the processing unit 1501 may be further configured to: before controlling, based on the first information, the amplification unit 1504 to turn on or turn off the amplify-and-forward function on the first time domain resource unit in the first time domain resource set, determine an uplink forwarding timing advance based on an initial advance.

Alternatively, the processing unit 1501 may be further configured to: before controlling, based on the first information, the amplification unit 1504 to turn on or turn off the amplify-and-forward function on the first time domain resource unit in the first time domain resource set, determine an uplink forwarding timing advance based on an interval of switching from downlink forwarding to uplink forwarding and a guard period between a time domain resource used for downlink transmission and a time domain resource used for uplink transmission.

Alternatively, the processing unit 1501 may be further configured to: before controlling, based on the first information, the amplification unit 1504 to turn on or turn off the amplify-and-forward function on the first time domain resource unit in the first time domain resource set, for a start position of uplink transmission, determine an uplink forwarding timing advance based on an interval of switching from downlink forwarding to uplink forwarding and a guard period between a time domain resource used for downlink transmission and a time domain resource used for uplink transmission; and for an end position of the uplink transmission, determine an uplink forwarding timing advance based on an initial advance.

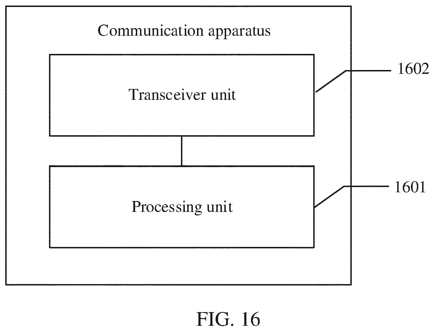

An embodiment of this application provides another communication apparatus. The communication apparatus may be specifically configured to implement the method performed by the host device in the foregoing embodiment. The apparatus may be the host device, or may be a chip, a chip set, or a part that is configured to perform a related method function in a chip in the host device. A structure of the communication apparatus may be shown in FIG. 16, and includes a processing unit 1601 and a transceiver unit 1602. The transceiver unit 1602 may communicate with the outside, and the processing unit 1601 is configured to perform processing, for example, determine first information. The transceiver unit 1602 may also be referred to as a communication interface, a transceiver unit, or a communication unit. The transceiver unit 1602 may be configured to perform an action performed by the host device in the foregoing method embodiment.

For example, the transceiver unit 1602 includes a sending module and/or a receiving module, respectively configured to perform the sending and receiving steps of the host device in the foregoing method embodiment. The transceiver unit 1602 is configured to perform a transceiver-related operation on a host device side in the foregoing method embodiment, and the processing unit 1601 is configured to perform a processing-related operation of the host device in the foregoing method embodiment. For example, the processing unit 1601 is configured to determine first information, where the first information is used to determine whether a relay device turns on an amplify-and-forward function on a first time domain resource unit in a first time domain resource set, the first time domain resource set includes one or more time domain resource units, and the first time domain resource unit is any time domain resource unit in the first time domain resource set. The transceiver unit 1602 is configured to send the first information to the relay device.

For example, the first information indicates that the amplify-and-forward function of the relay device on the first time domain resource unit is to be in an off state, or the first information indicates that the amplify-and-forward function of the relay device on the first time domain resource unit is to be in an on state.

For example, the amplify-and-forward function of the relay device includes an uplink amplify-and-forward function and a downlink amplify-and-forward function. The first information indicates at least one of the following information: a status of the uplink amplify-and-forward function on the first time domain resource unit, and a status of the downlink amplify-and-forward function on the first time domain resource unit.

For example, the first information includes at least one of the following information: first sub information and second sub information, where the first sub information indicates the status of the uplink amplify-and-forward function on the first time domain resource unit, and the second sub information indicates the status of the downlink amplify-and-forward function on the first time domain resource unit.

For example, the first information includes a first indication state, a second indication state, a third indication state, and a fourth indication state. The first indication state indicates that both the uplink amplify-and-forward function and the downlink amplify-and-forward function on the first time domain resource unit are in an on state. The second indication state indicates that the uplink amplify-and-forward function on the first time domain resource unit is in an off state, and the downlink amplify-and-forward function is in the on state. The third indication state indicates that the uplink amplify-and-forward function on the first time domain resource unit is in the on state, and the downlink amplify-and-forward function is in the off state. The fourth indication state indicates that both the uplink amplify-and-forward function and the downlink amplify-and-forward function on the first time domain resource unit are in the off state.

Optionally, the transceiver unit 1602 may be further configured to send second information to the relay device, where the second information indicates at least one of the following information: a start position of uplink transmission in a first periodicity, an end position of uplink transmission in the first periodicity, a start position of downlink transmission in the first periodicity, and an end position of downlink transmission in the first periodicity, where the first time domain resource set includes one or more time domain resources in the first periodicity.

Optionally, the transceiver unit 1602 may be further configured to send an uplink forwarding timing advance to the relay device.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that, for functions or implementations of the modules in this embodiment of this application, refer to related descriptions in the method embodiment.

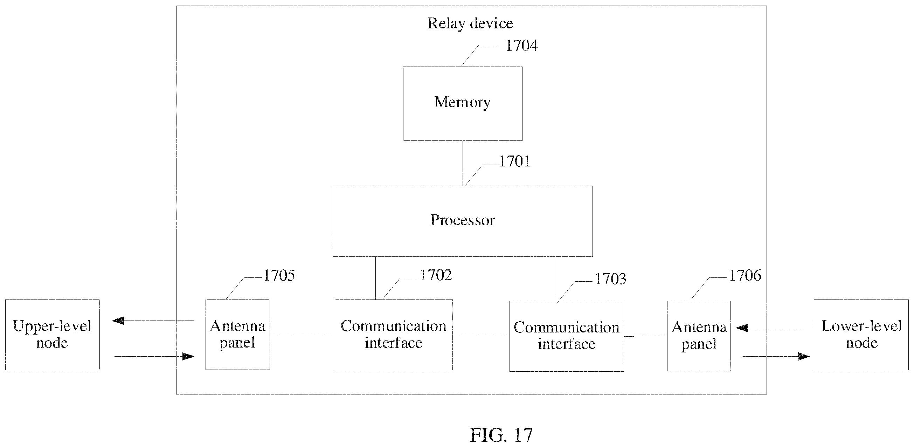

In a possible manner, the relay device may be shown in FIG. 17. The relay device may include a processor 1701, a communication interface 1702, and a communication interface 1703, and may further include a memory 1704. The communication interface 1702 may be used for communication between the relay device and an upper-level node, and the communication interface 1703 may be used for communication between the relay device and a lower-level node.

The processing unit 1501 may be the processor 1701. The first communication unit 1502 may be the communication interface 1702, and the second communication unit 1503 may be the communication interface 1703. The communication interface may also be referred to as a transceiver unit, or may also be referred to as a transceiver. The communication interface may include a receiver (or referred to as a receiver machine or a receiver circuit) and a transmitter (or referred to as a transmitter machine or a transmitter circuit), to respectively implement functions of a sending unit and a receiving unit. The receiver is configured to receive a signal, and the transmitter is configured to transmit a signal. The communication interface may alternatively be an input/output interface. In the input/output interface, the input corresponds to the receiving or obtaining operation, and the output corresponds to the sending operation.

The processor 1701 may be a central processing unit (central processing unit, CPU), a digital processing unit, or the like. The communication interface 1702 and the communication interface 1703 each may be a transceiver, an interface circuit such as a transceiver circuit or a transceiver chip. The apparatus further includes the memory 1704, configured to store a program executed by the processor 1701. The memory 1704 may be a nonvolatile memory such as a hard disk drive (hard disk drive, HDD) or a solid-state drive (solid-state drive, SSD), or may be a volatile memory (volatile memory) such as a random-access memory (random-access memory, RAM). The memory 1704 is any other medium that can be used to carry or store expected program code in a form of instructions or a data structure and that can be accessed by a computer, but is not limited thereto.

The processor 1701, the communication interface 1702, the communication interface 1703, and the memory 1704 may communicate with each other through an internal connection path, to transfer a control signal and/or a data signal. The memory 1704 is configured to store a computer program. The processor 1701 is configured to invoke and run the computer program from the memory 1704, to control the communication interface 1702 and the communication interface 1703 to receive/send signals. Optionally, the relay device may further include an antenna panel 1705 and an antenna panel 1706. The antenna panel 1705 is configured to send, to an upper-level node by using a radio signal, data or control signaling or information or a message output by the communication interface 1702, and receive a radio signal sent by the upper-level node. The antenna panel 1706 is configured to send, to a lower-level node by using a radio signal, data or control signaling or information or a message output by the communication interface 1703, and receive a radio signal sent by the lower-level node.

Optionally, the communication interface 1702 may implement an uplink forwarding function of the amplification unit 1504. It may also be understood that the communication interface 1702 may implement a function of the uplink amplification module in the amplification unit 1504. The communication interface 1703 may implement a downlink forwarding function of the amplification unit 1504. It may also be understood that the communication interface 1703 may implement a function of the downlink amplification module in the amplification unit 1504. The communication interface 1702 and the communication interface 1703 may have one or more functions of filtering, gain adjustment, frequency mixing, power amplification, and the like. The communication interface 1702 and the communication interface 1703 may be configured to perform filtering, gain adjustment, and frequency mixing on a received signal, and may further perform processing such as filtering, gain adjustment, frequency mixing, and power amplification on a to-be-sent signal. For example, when the relay device communicates with the upper-level node through the communication interface 1702, information (for example, the first information) sent by the upper-level node to the relay device may be received by the relay device through the antenna panel 1705, and then transmitted to the processor 1701 after undergoing filtering, gain adjustment, and frequency mixing performed by the communication interface 1702. Alternatively, the processor 1701 may generate information to be sent to the host device, and the information is sent to the upper-level node through the antenna panel 1705 after undergoing filtering, gain adjustment, frequency mixing, and power amplification performed by the communication interface 1702. In an uplink amplify-and-forward process, a signal sent by a lower-level node is received by the relay device through the antenna panel 1706, undergoes filtering, gain adjustment, and frequency mixing performed by the communication interface 1703, then undergoes processing such as power amplification and filtering performed by the communication interface 1702, and finally is sent by the antenna panel 1705 to the upper-level node.

For another example, when the relay device communicates with the lower-level node through the communication interface 1703, information sent by the lower-level node to the relay device may be received by the relay device through the antenna panel 1706, and then transmitted to the processor 1701 after undergoing filtering, gain adjustment, and frequency mixing performed by the communication interface 1703. Alternatively, the processor 1701 may generate information to be sent to a terminal device (or a lower-level node), and the information is sent to the upper-level node through the antenna panel 1706 after undergoing filtering, gain adjustment, frequency mixing, and power amplification performed by the communication interface 1703. In a downlink amplify-and-forward process, a signal sent by a lower-level node is received by the relay device through the antenna panel 1705, undergoes filtering, gain adjustment, and frequency mixing performed by the communication interface 1702, then undergoes processing such as power amplification and filtering performed by the communication interface 1703, and finally is sent by the antenna panel 1706 to the lower-level node.

In another embodiment, the communication interface 1702 and the communication interface 1703 do not have an amplification function, an amplifier is connected between the communication interface 1702 and the communication interface 1703, and amplification of an uplink signal and a downlink signal is completed by the amplifier. The amplifier is configured to amplify a downlink signal that is received by the communication interface 1702 from the host device, and send the amplified downlink signal through the communication interface 1703 and the antenna panel 1706. The amplifier may be further configured to amplify an uplink signal that is received by the communication interface 1703 from a lower-level node (or user equipment), and send the amplified uplink signal through the communication interface 1702 and the antenna panel 1705. The amplifier may turn on or turn off an uplink signal amplification function and/or a downlink signal amplification function under control of the processor.

The processor 1701 is configured to execute program code stored in the memory 1704, and is specifically configured to perform an action of the processing unit 1501. Details are not described herein again in this application. The communication interface 1702 is specifically configured to perform an action of the first communication unit 1502, and the communication interface 1703 is specifically configured to perform an action of the second communication unit 1503. Details are not described herein again in this application.

The processor 1701 and the memory 1704 may be integrated into a communication apparatus. The processor 1701 is configured to execute program code stored in the memory 1704, to implement the foregoing function. During specific implementation, the memory 1704 may alternatively be integrated into the processor 1701, or be independent of the processor 1701. The processor 1701 may correspond to the processing unit in FIG. 15.

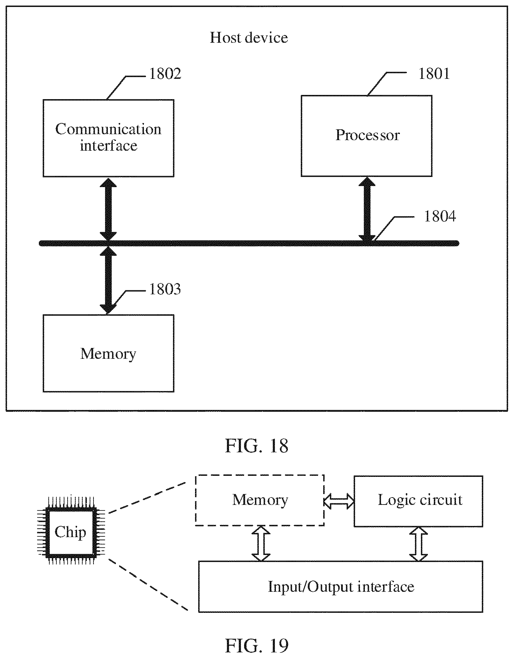

In a possible manner, the host device may be shown in FIG. 18. The host device may include a processor 1801 and a communication interface 1802, and may further include a memory 1803. The processing unit 1601 may be the processor 1801. The transceiver unit 1602 may be the communication interface 1802. It should be further understood that the transceiver unit 1602 may alternatively be an input/output interface. In addition, a function of the transceiver unit 1602 may be implemented by a transceiver. The transceiver may include a transmitter and/or a receiver, to respectively implement functions of a sending unit and a receiving unit.

In the input/output interface, the input corresponds to the receiving or obtaining operation, and the output corresponds to the sending operation.

The processor 1801 may be a central processing unit (central processing unit, CPU), a digital processing unit, or the like. The communication interface 1802 may be a transceiver, an interface circuit such as a transceiver circuit or a transceiver chip. The apparatus further includes the memory 1803, configured to store a program executed by the processor 1801. The memory 1803 may be a nonvolatile memory such as a hard disk drive (hard disk drive, HDD) or a solid-state drive (solid-state drive, SSD), or may be a volatile memory (volatile memory) such as a random-access memory (random-access memory, RAM). The memory 1803 is any other medium that can be used to carry or store expected program code in a form of instructions or a data structure and that can be accessed by a computer, but is not limited thereto.

The processor 1801 is configured to execute program code stored in the memory 1803, and is specifically configured to perform an action of the processing unit 1601. Details are not described herein again in this application. The communication interface 1802 is specifically configured to perform an action of the transceiver unit 1602. Details are not described herein again in this application.

The communication interface 1802, the processor 1801, and the memory 1803 may communicate with each other through an internal connection path, to transfer a control signal and/or a data signal. The memory 1803 is configured to store a computer program. The processor 1801 is configured to invoke and run the computer program from the memory 1803, to control the communication interface 1802 to receive/send signals. Optionally, the communication apparatus may further include an antenna, configured to send, by using a radio signal, data, control signaling, information, or a message output by the communication interface 1802.

The processor 1801 and the memory 1803 may be integrated into a communication apparatus. The processor 1801 is configured to execute program code stored in the memory 1803, to implement the foregoing function. During specific implementation, the memory 1803 may alternatively be integrated into the processor 1801, or be independent of the processor 1801. The processor 1801 may correspond to the processing unit in FIG. 15.

The communication interface 1802 may correspond to the transceiver unit in FIG. 16, and may also be referred to as a transceiver unit, or may be referred to as a transceiver. The communication interface 1802 may include a receiver (or referred to as a receiver machine or a receiver circuit) and a transmitter (or referred to as a transmitter machine or a transmitter circuit). The receiver is configured to receive a signal, and the transmitter is configured to transmit a signal.

A specific connection medium between the communication interface 1802, the processor 1801, and the memory 1803 is not limited in this embodiment of this application. In this embodiment of this application, the memory 1803, the processor 1801, and the communication interface 1802 are connected through a bus 1804 in FIG. 18. The bus is indicated by using a bold line in FIG. 18. A connection manner between other components is merely an example for description, and is not limited thereto. The bus may be classified into an address bus, a data bus, a control bus, and the like. For ease of representation, only one thick line is used to represent the bus in FIG. 18, but this does not mean that there is only one bus or only one type of bus.

An embodiment of this application further provides a communication apparatus, including a processor and an interface. The processor may be configured to perform the method in the foregoing method embodiment.

It should be understood that the communication apparatus may be a chip. For example, the communication apparatus may be a field programmable gate array (field programmable gate array, FPGA), an application specific integrated circuit (application specific integrated circuit, ASIC), a system on chip (system on chip, SoC), a CPU, a network processor (network processor, NP), a digital signal processing circuit (digital signal processor, DSP), a micro controller unit (micro controller unit, MCU), a programmable logic device (programmable logic device, PLD), or another integrated chip.

For example, the interface may be an interface circuit. For example, the interface circuit may be a code/data read/write interface circuit. The interface circuit may be configured to receive code instructions (where the code instructions are stored in a memory and may be directly read from the memory, or may be read from the memory by using another component) and transmit the code instructions to the processor. The processor may be configured to run the code instructions to perform the method in the foregoing method embodiment.

For another example, the interface circuit may alternatively be a signal transmission interface circuit between the communication processor and a transceiver. For example, in a sending scenario, the processor is configured to perform XX to obtain Y data (XX is a non-air interface operation, and includes but is not limited to operations such as determining, decision, processing, calculation, searching, and comparison). The interface circuit may be configured to send the Y data to a transmitter (the transmitter is configured to perform a sending operation on an air interface). For another example, in a receiving scenario, the interface circuit may be configured to receive Z data from a receiver (the receiver is configured to perform a receiving operation on an air interface), and send the Z data to the processor. The processor is configured to perform XX processing on the Z data (XX is a non-air interface operation, and includes but is not limited to operations such as determining, decision, processing, calculation, searching, and comparison).

For example, FIG. 19 shows a possible structure of a chip. The chip includes a logic circuit and an input/output interface, and may further include a memory. The input/output interface may be configured to receive code instructions (the code instructions are stored in the memory, and may be directly read from the memory, or may be read from the memory by using another component), and transmit the code instructions to the logic circuit. The logic circuit may be configured to run the code instructions to perform the method in the foregoing method embodiment.

Alternatively, the input/output interface may be a signal transmission interface circuit between the logic circuit and the transceiver. For example, in a sending scenario, the logic circuit is configured to perform XX to obtain Y data (XX is a non-air interface operation, and includes but is not limited to operations such as determining, decision, processing, calculation, searching, and comparison). The input/output interface may be configured to send the Y data to a transmitter (the transmitter is configured to perform a sending operation on an air interface). For another example, in a receiving scenario, the input/output interface may be configured to receive Z data from a receiver (the receiver is configured to perform a receiving operation on an air interface), and send the Z data to the logic circuit. The logic circuit is configured to perform XX processing on the Z data (XX is a non-air interface operation, and includes but is not limited to operations such as determining, decision, processing, calculation, searching, and comparison).

An embodiment of the present invention further provides a computer-readable storage medium, configured to store computer software instructions that need to be executed by the foregoing processor, and the computer-readable storage medium includes a program that needs to be executed by the foregoing processor.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or the processor of another programmable data processing device generate an apparatus for implementing a specific function in one or more processes in the flowcharts and/or in one or more blocks in the block diagrams.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operation steps are performed on the computer or another programmable device, thereby generating computer-implemented processing. Therefore, the instructions executed on the computer or another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A relay communication method, comprising:
receiving, by a relay device, first information sent by a host device, wherein the first information is used to determine whether the relay device turns on an amplify-and-forward function on a first time domain resource unit in a first time domain resource set, the first time domain resource set comprises one or more time domain resource units, and the first time domain resource unit is any time domain resource unit in the first time domain resource set; and
performing, by the relay device, relay forwarding based on the first information.

2. The method according to claim 1, wherein the first information indicates to turn off the amplify-and-forward function on the first time domain resource unit, or the first information indicates to turn on the amplify-and-forward function on the first time domain resource unit.

3. The method according to claim 2, wherein the performing, by the relay device, relay forwarding based on the first information comprises:
when the first information indicates to turn off the amplify-and-forward function on the first time domain resource unit, turning off, by the relay device, the amplify-and-forward function on the first time domain resource unit; or
when the first information indicates to turn on the amplify-and-forward function on the first time domain resource unit, and if the first time domain resource unit is configured for uplink transmission, turning on, by the relay device, an uplink amplify-and-forward function on the first time domain resource unit; or
when the first information indicates to turn on the amplify-and-forward function on the first time domain resource unit, and if the first time domain resource unit is configured for downlink transmission, turning on, by the relay device, a downlink amplify-and-forward function on the first time domain resource unit; or
when the first information indicates to turn on the amplify-and-forward function on the first time domain resource unit, and if the first time domain resource unit comprises at least one first time domain resource subunit and at least one second time domain resource subunit, the first time domain resource subunit is configured for uplink transmission, and the second time domain resource subunit is configured for downlink transmission, turning on, by the relay device, an uplink amplify-and-forward function on the at least one first time domain resource subunit, and turning on a downlink amplify-and-forward function on the at least one second time domain resource subunit.

4. The method according to claim 1, wherein the first information indicates at least one of the following information: a status of an uplink amplify-and-forward function on the first time domain resource unit, and a status of a downlink amplify-and-forward function on the first time domain resource unit.

5. The method according to claim 4, wherein the first information comprises at least one of the following information: first sub information and second sub information, wherein the first sub information indicates the status of the uplink amplify-and-forward function on the first time domain resource unit, and the second sub information indicates the status of the downlink amplify-and-forward function on the first time domain resource unit.

6. The method according to claim 4, wherein the first information comprises at least one of a first indication state, a second indication state, a third indication state, and a fourth indication state;
the first indication state indicates that both the uplink amplify-and-forward function and the downlink amplify-and-forward function on the first time domain resource unit are in an on state;
the second indication state indicates that the uplink amplify-and-forward function on the first time domain resource unit is in an off state, and the downlink amplify-and-forward function is in the on state;
the third indication state indicates that the uplink amplify-and-forward function on the first time domain resource unit is in the on state, and the downlink amplify-and-forward function is in the off state; and
the fourth indication state indicates that both the uplink amplify-and-forward function and the downlink amplify-and-forward function on the first time domain resource unit are in the off state.

7. The method according to any one of claims 4 to 6, wherein the first time domain resource unit comprises at least one first time domain resource subunit and at least one second time domain resource subunit, the first time domain resource subunit is configured for uplink transmission, and the second time domain resource subunit is configured for downlink transmission; and
the performing, by the relay device, relay forwarding based on the first information comprises:
if the first information indicates that the uplink amplify-and-forward function on the first time domain resource unit is to be in the off state, turning off, by the relay device, the uplink amplify-and-forward function on the at least one first time domain resource subunit; or
if the first information indicates that the uplink amplify-and-forward function on the first time domain resource unit is to be in the on state, turning on, by the relay device, the uplink amplify-and-forward function on the at least one first time domain resource subunit.

8. The method according to any one of claims 4 to 7, wherein the first time domain resource unit comprises at least one first time domain resource subunit and at least one second time domain resource subunit, the first time domain resource subunit is configured for uplink transmission, and the second time domain resource subunit is configured for downlink transmission; and
the performing, by the relay device, relay forwarding based on the first information comprises:
if the first information indicates that the downlink amplify-and-forward function on the first time domain resource unit is to be in the off state, turning off, by the relay device, the downlink amplify-and-forward function on the at least one second time domain resource subunit; or
if the first information indicates that the downlink amplify-and-forward function on the first time domain resource unit is to be in the on state, amplifying, by the relay device, a downlink signal from the host device and forwarding the amplified downlink signal to a terminal device on the at least one second time domain resource subunit.

9. The method according to any one of claims 1 to 8, wherein the performing, by the relay device, relay forwarding based on the first information comprises:
when the first information indicates that the amplify-and-forward function on the first time domain resource unit is to be in the off state, turning on, by the relay device, the amplify-and-forward function on a time domain resource of a specific signal, wherein the first time domain resource unit comprises the time domain resource of the specific signal.

10. The method according to claim 9, wherein the specific signal comprises at least one of the following signals: a synchronization signal/physical broadcast channel block SSB, a system information block 1 SIB 1-physical downlink control channel PDCCH, a SIB1-physical downlink shared channel PDSCH, a channel state information reference signal CSI-RS, a tracking reference signal TRS, a physical random access channel PRACH, and a sounding reference signal SRS.

11. The method according to any one of claims 1 to 10, wherein before the performing, by the relay device, relay forwarding based on the first information, the method further comprises:
receiving, by the relay device, second information, wherein the second information indicates at least one of the following information: a start position of uplink transmission in a first periodicity, an end position of uplink transmission in the first periodicity, a start position of downlink transmission in the first periodicity, and an end position of downlink transmission in the first periodicity; and
determining, by the relay device based on the second information, a time domain resource used for uplink forwarding and a time domain resource used for downlink forwarding in the first time domain resource set, wherein the first time domain resource set comprises one or more time domain resources in the first periodicity.

12. The method according to any one of claims 1 to 11, wherein before the performing, by the relay device, relay forwarding based on the first information, the method further comprises:
receiving, by the relay device, an uplink forwarding timing advance sent by the host device.

13. The method according to any one of claims 1 to 11, wherein before the performing, by the relay device, relay forwarding based on the first information, the method further comprises:
determining, by the relay device, an uplink forwarding timing advance based on an initial advance.

14. The method according to any one of claims 1 to 11, wherein before the performing, by the relay device, relay forwarding based on the first information, the method further comprises:
determining, by the relay device, an uplink forwarding timing advance based on an interval of switching from downlink forwarding to uplink forwarding and a guard period between a time domain resource used for downlink transmission and a time domain resource used for uplink transmission.

15. The method according to any one of claims 1 to 11, wherein before the performing, by the relay device, relay forwarding based on the first information, the method further comprises:
for a start position of uplink transmission, determining, by the relay device, an uplink forwarding timing advance based on an interval of switching from downlink forwarding to uplink forwarding and a guard period between a time domain resource used for downlink transmission and a time domain resource used for uplink transmission; and
for an end position of the uplink transmission, determining, by the relay device, an uplink forwarding timing advance based on an initial advance.

16. A relay communication method, comprising:
determining, by a host device, first information, wherein the first information is used to determine whether a relay device turns on an amplify-and-forward function on a first time domain resource unit in a first time domain resource set, the first time domain resource set comprises one or more time domain resource units, and the first time domain resource unit is any time domain resource unit in the first time domain resource set; and
sending, by the host device, the first information to the relay device.

17. The method according to claim 16, wherein the first information indicates to turn off the amplify-and-forward function of the relay device on the first time domain resource unit, or the first information indicates to turn on the amplify-and-forward function of the relay device on the first time domain resource unit.

18. The method according to claim 17, wherein the first information indicates at least one of the following information: a status of an uplink amplify-and-forward function on the first time domain resource unit, and a status of a downlink amplify-and-forward function on the first time domain resource unit.

19. The method according to claim 18, wherein the first information comprises at least one of the following information: first sub information and second sub information, wherein the first sub information indicates the status of the uplink amplify-and-forward function on the first time domain resource unit, and the second sub information indicates the status of the downlink amplify-and-forward function on the first time domain resource unit.

20. The method according to claim 18, wherein the first information comprises at least one of a first indication state, a second indication state, a third indication state, and a fourth indication state;
the first indication state indicates that both the uplink amplify-and-forward function and the downlink amplify-and-forward function on the first time domain resource unit are in an on state;
the second indication state indicates that the uplink amplify-and-forward function on the first time domain resource unit is in an off state, and the downlink amplify-and-forward function is in the on state;
the third indication state indicates that the uplink amplify-and-forward function on the first time domain resource unit is in the on state, and the downlink amplify-and-forward function is in the off state; and
the fourth indication state indicates that both the uplink amplify-and-forward function and the downlink amplify-and-forward function on the first time domain resource unit are in the off state.

21. The method according to any one of claims 16 to 19, wherein the method further comprises:
sending, by the host device, second information to the relay device, wherein the second information indicates at least one of the following information: a start position of uplink transmission in a first periodicity, an end position of uplink transmission in the first periodicity, a start position of downlink transmission in the first periodicity, and an end position of downlink transmission in the first periodicity, wherein the first time domain resource set comprises one or more time domain resources in the first periodicity.

22. The method according to any one of claims 16 to 20, wherein the method further comprises:
sending, by the host device, an uplink forwarding timing advance to the relay device.

23. A relay communication apparatus, comprising a transceiver unit, a processing unit, and an amplification unit, wherein the amplification unit is configured to amplify and forward a signal;
the transceiver unit is configured to receive first information sent by a host device, wherein the first information is used to determine whether to turn on an amplify-and-forward function on a first time domain resource unit in a first time domain resource set, the first time domain resource set comprises one or more time domain resource units, and the first time domain resource unit is any time domain resource unit in the first time domain resource set; and
the processing unit is configured to control, based on the first information, whether the amplification unit turns on the amplify-and-forward function on the first time domain resource unit in the first time domain resource set.

24. The apparatus according to claim 23, wherein the first information indicates to turn off the amplify-and-forward function on the first time domain resource unit, or the first information indicates to turn on the amplify-and-forward function on the first time domain resource unit.

25. The apparatus according to claim 24, wherein the processing unit is specifically configured to:
when the first information indicates to turn off the amplify-and-forward function on the first time domain resource unit, control the amplification unit to turn off the amplify-and-forward function on the first time domain resource unit; or
when the first information indicates to turn on the amplify-and-forward function on the first time domain resource unit, and if the first time domain resource unit is configured for uplink transmission, control the amplification unit to turn on an uplink amplify-and-forward function on the first time domain resource unit; or
when the first information indicates to turn on the amplify-and-forward function on the first time domain resource unit, and if the first time domain resource unit is configured for downlink transmission, control the amplification unit to turn on a downlink amplify-and-forward function on the first time domain resource unit; or
when the first information indicates to turn on the amplify-and-forward function on the first time domain resource unit, and if the first time domain resource unit comprises at least one first time domain resource subunit and at least one second time domain resource subunit, the first time domain resource subunit is configured for uplink transmission, and the second time domain resource subunit is configured for downlink transmission, control the amplification unit to turn on an uplink amplify-and-forward function on the at least one first time domain resource subunit, and turn on a downlink amplify-and-forward function on the at least one second time domain resource subunit.

26. The apparatus according to claim 23, wherein the first information indicates at least one of the following information: a status of an uplink amplify-and-forward function on the first time domain resource unit, and a status of a downlink amplify-and-forward function on the first time domain resource unit.

27. The apparatus according to claim 26, wherein the first information comprises at least one of the following information: first sub information and second sub information, wherein the first sub information indicates the status of the uplink amplify-and-forward function on the first time domain resource unit, and the second sub information indicates the status of the downlink amplify-and-forward function on the first time domain resource unit.

28. The apparatus according to claim 26, wherein the first information comprises at least one of a first indication state, a second indication state, a third indication state, and a fourth indication state;
the first indication state indicates that both the uplink amplify-and-forward function and the downlink amplify-and-forward function on the first time domain resource unit are in an on state;
the second indication state indicates that the uplink amplify-and-forward function on the first time domain resource unit is in an off state, and the downlink amplify-and-forward function is in the on state;
the third indication state indicates that the uplink amplify-and-forward function on the first time domain resource unit is in the on state, and the downlink amplify-and-forward function is in the off state; and
the fourth indication state indicates that both the uplink amplify-and-forward function and the downlink amplify-and-forward function on the first time domain resource unit are in the off state.

29. The apparatus according to any one of claims 26 to 28, wherein the first time domain resource unit comprises at least one first time domain resource subunit and at least one second time domain resource subunit, the first time domain resource subunit is configured for uplink transmission, and the second time domain resource subunit is configured for downlink transmission; and
the processing unit is specifically configured to:
if the first information indicates that the uplink amplify-and-forward function on the first time domain resource unit is to be in the off state, control the amplification unit to turn off the uplink amplify-and-forward function on the at least one first time domain resource subunit; or
if the first information indicates that the uplink amplify-and-forward function on the first time domain resource unit is to be in the on state, control the amplification unit to turn on the uplink amplify-and-forward function on the at least one first time domain resource subunit.

30. The apparatus according to any one of claims 26 to 29, wherein the first time domain resource unit comprises at least one first time domain resource subunit and at least one second time domain resource subunit, the first time domain resource subunit is configured for uplink transmission, and the second time domain resource subunit is configured for downlink transmission; and
the processing unit is specifically configured to:
if the first information indicates that the downlink amplify-and-forward function on the first time domain resource unit is to be in the off state, control the amplification unit to turn off the downlink amplify-and-forward function on the at least one second time domain resource subunit; or
if the first information indicates that the downlink amplify-and-forward function on the first time domain resource unit is to be in the on state, control the amplification unit to amplify a downlink signal from the host device and forward the amplified downlink signal to a terminal device on the at least one second time domain resource subunit.

31. The apparatus according to any one of claims 23 to 30, wherein the processing unit is specifically configured to:
when the first information indicates that the amplify-and-forward function on the first time domain resource unit is to be in the off state, control the amplification unit to turn on the amplify-and-forward function on a time domain resource of a specific signal, wherein the first time domain resource unit comprises the time domain resource of the specific signal.

32. The apparatus according to claim 31, wherein the specific signal comprises at least one of the following signals: a synchronization signal/physical broadcast channel block SSB, a system information block 1 SIB1-physical downlink control channel PDCCH, a SIB1-physical downlink shared channel PDSCH, a channel state information reference signal CSI-RS, a tracking reference signal TRS, a physical random access channel PRACH, and a sounding reference signal SRS.

33. The apparatus according to any one of claims 23 to 32, wherein the transceiver unit is further configured to:
before the processing unit controls, based on the first information, whether the amplification unit turns on the amplify-and-forward function on the first time domain resource unit in the first time domain resource set, receive second information, wherein the second information indicates at least one of the following information: a start position of uplink transmission in a first periodicity, an end position of uplink transmission in the first periodicity, a start position of downlink transmission in the first periodicity, and an end position of downlink transmission in the first periodicity; and
the processing unit is further configured to:
determine, based on the second information, a time domain resource used for uplink forwarding and a time domain resource used for downlink forwarding in the first time domain resource set, wherein the first time domain resource set comprises one or more time domain resources in the first periodicity.

34. The apparatus according to any one of claims 23 to 33, wherein the transceiver unit is further configured to:
before the processing unit controls, based on the first information, whether the amplification unit turns on the amplify-and-forward function on the first time domain resource unit in the first time domain resource set, receive an uplink forwarding timing advance sent by the host device.

35. The apparatus according to any one of claims 23 to 33, wherein the processing unit is further configured to:
before controlling, based on the first information, whether the amplification unit turns on the amplify-and-forward function on the first time domain resource unit in the first time domain resource set, determine an uplink forwarding timing advance based on an initial advance.

36. The apparatus according to any one of claims 23 to 33, wherein the processing unit is further configured to:
before controlling, based on the first information, whether the amplification unit turns on the amplify-and-forward function on the first time domain resource unit in the first time domain resource set, determine an uplink forwarding timing advance based on an interval of switching from downlink forwarding to uplink forwarding and a guard period between a time domain resource used for downlink transmission and a time domain resource used for uplink transmission.

37. The apparatus according to any one of claims 23 to 33, wherein the processing unit is further configured to:
before controlling, based on the first information, whether the amplification unit turns on the amplify-and-forward function on the first time domain resource unit in the first time domain resource set, for a start position of uplink transmission, determine an uplink forwarding timing advance based on an interval of switching from downlink forwarding to uplink forwarding and a guard period between a time domain resource used for downlink transmission and a time domain resource used for uplink transmission; and
for an end position of the uplink transmission, determine an uplink forwarding timing advance based on an initial advance.

38. A relay communication apparatus, comprising:
a processing unit, configured to determine first information, wherein the first information is used to determine whether a relay device turns on an amplify-and-forward function on a first time domain resource unit in a first time domain resource set, the first time domain resource set comprises one or more time domain resource units, and the first time domain resource unit is any time domain resource unit in the first time domain resource set; and
a transceiver unit, configured to send the first information to the relay device.

39. The apparatus according to claim 38, wherein the first information indicates to turn off the amplify-and-forward function of the relay device on the first time domain resource unit, or the first information indicates to turn on the amplify-and-forward function of the relay device on the first time domain resource unit.

40. The apparatus according to claim 39, wherein the first information indicates at least one of the following information: a status of an uplink amplify-and-forward function on the first time domain resource unit, and a status of a downlink amplify-and-forward function on the first time domain resource unit.

41. The apparatus according to claim 40, wherein the first information comprises at least one of the following information: first sub information and second sub information, wherein the first sub information indicates the status of the uplink amplify-and-forward function on the first time domain resource unit, and the second sub information indicates the status of the downlink amplify-and-forward function on the first time domain resource unit.

42. The apparatus according to claim 40, wherein the first information comprises at least one of a first indication state, a second indication state, a third indication state, and a fourth indication state;
the first indication state indicates that both the uplink amplify-and-forward function and the downlink amplify-and-forward function on the first time domain resource unit are in an on state;
the second indication state indicates that the uplink amplify-and-forward function on the first time domain resource unit is in an off state, and the downlink amplify-and-forward function is in the on state;
the third indication state indicates that the uplink amplify-and-forward function on the first time domain resource unit is in the on state, and the downlink amplify-and-forward function is in the off state; and
the fourth indication state indicates that both the uplink amplify-and-forward function and the downlink amplify-and-forward function on the first time domain resource unit are in the off state.

43. The apparatus according to any one of claims 38 to 41, wherein the transceiver unit is further configured to:
send second information to the relay device, wherein the second information indicates at least one of the following information: a start position of uplink transmission in a first periodicity, an end position of uplink transmission in the first periodicity, a start position of downlink transmission in the first periodicity, and an end position of downlink transmission in the first periodicity, wherein the first time domain resource set comprises one or more time domain resources in the first periodicity.

44. The apparatus according to any one of claims 38 to 42, wherein the transceiver unit is further configured to:
send an uplink forwarding timing advance to the relay device.

45. A communication device, wherein the communication device comprises a transceiver, a processor, an amplifier, and a memory; the memory stores program instructions; and when the program instructions are executed, the communication device is enabled to perform the method according to any one of claims 1 to 15.

46. A communication device, wherein the communication device comprises a transceiver, a processor, and a memory; the memory stores program instructions; and when the program instructions are executed, the communication device is enabled to perform the method according to any one of claims 16 to 22.

47. A chip, wherein the chip is coupled to a memory in an electronic device, so that when running, the chip invokes program instructions stored in the memory, to implement the method according to any one of claims 1 to 15, or implement the method according to any one of claims 16 to 22.

48. A computer-readable storage medium, wherein the computer-readable storage medium comprises program instructions, and when the program instructions are run on a device, the device is enabled to perform the method according to any one of claims 1 to 22.

49. A communication system, comprising the relay communication apparatus according to any one of claims 23 to 37 and the relay communication apparatus according to any one of claims 38 to 44.
